# EUROPÄISCHE PATENTSCHRIFT

(11) **EP 4 087 818 B1**
(45) Veröffentlichungstag und Bekanntmachung des Hinweises auf die Patenterteilung: **05.06.2024**
(21) Anmeldenummer: 21700824.2
(22) Anmeldetag: 05.01.2021
(51) Int. Cl.: C04B 11/26, C01B 17/50, C01B 17/74, C01B 25/232, C01F 11/08, C01F 11/46, C04B 7/04, C04B 11/00

(54) **INTEGRIERTES VERFAHREN ZUR HERSTELLUNG VON SCHWEFELSÄUREPROZESS-GEEIGNETER SCHWEFELDIOXIDQUALITÄT AUS KALZIUMSULFAT/PHOSPHOGIPS AUS DER PHOSPHORSÄUREPRODUKTION**
INTEGRATED METHOD FOR PRODUCING SULPHUR DIOXIDE QUALITY SUITABLE FOR A SULPHURIC ACID PROCESS FROM CALCIUM SULPHATE/PHOSPHOGYPSUM FROM PHOSPHORIC ACID PRODUCTION
PROCÉDÉ INTÉGRÉ DE PRODUCTION D'UNE QUALITÉ DE DIOXYDE DE SOUFRE APPROPRIÉE POUR UN PROCÉDÉ D'ACIDE SULFURIQUE À PARTIR DE SULFATE DE CALCIUM/PHOSPHOGYPSE ISSU DE LA PRODUCTION D'ACIDE PHOSPHORIQUE

(30) Priorität: 08.01.2020 DE 102020100260
(43) Veröffentlichungstag der Anmeldung: 16.11.2022
(73) Patentinhaber: thyssenkrupp Industrial Solutions AG, 45143 Essen (DE); thyssenkrupp AG, 45143 Essen (DE)
(72) Erfinder: STOCKHOFF, Peter, 46286 Dorsten (DE); GUETTA, Zion, 44309 Dortmund (DE)
(74) Vertreter: thyssenkrupp Intellectual Property GmbH
(86) Internationale Anmeldenummer: PCT/EP2021/050035
(87) Internationale Veröffentlichungsnummer: WO 2021/140076

(56) Entgegenhaltungen:
- EP-A1- 0 041 761
- CA-A- 828 060
- US-A- 4 312 842
- US-A- 4 415 543
- US-A- 4 608 238

## Beschreibung

Die vorliegende Erfindung betrifft ein Verfahren zur Herstellung von Schwefeldioxid unter Verwendung von Kalziumsulfat, das bei der Phosphorsäureproduktion entsteht
Kalziumsulfat ist ein Abfallprodukt der Phosphorsäure produzierenden Industrie und fällt als Dihydrat und/oder Hemihydrat bei dem Aufschluss von Phosphaterzen mit Schwefelsäure an. Das bei der Herstellung von Phosphorsäure gebildete Kalziumsulfat wird auch als Phosphorgips bezeichnet.

Bedingt durch Verunreinigungen wie Phosphor, Fluor, radioaktive Komponenten und Schwermetalle im Kalziumsulfat aus der Phosphorsäureproduktion sind die heutigen Möglichkeiten zur Verwendung des Kalziumsulfates, z.B. als Zementzusatzstoff, Düngemittel, Mörtel oder Straßenbaumaterial, eingeschränkt, so dass weltweit nur 15% der Jahresproduktion an Kalziumsulfat aus der Phosphorsäureproduktion entsprechend verwendet werden. Die restlichen 85% der Jahresproduktion an Kalziumsulfat werden entweder auf Halde gelagert oder im Meer verklappt.

Aufgrund der aktuellen Umweltsituation werden Lagerstätten zur Deponierung des Phosphorgipses oder die Verklappung von Phosphorgips im Meer entweder nur unter strengeren Auflagen oder gar nicht mehr genehmigt.

Die aus dem Phosphorsäureprozess erzielte Phosphorgipsqualität ist abhängig von Faktoren wie eingesetztes Rohphosphat und Prozessbedingungen bei dem Aufschluss des Rohphosphats mit Schwefelsäure.

Der aufbereitete Rohphosphat kann nach den folgenden Aufbereitungsverfahren über die möglichen Phosphorsäureverfahren zur Phosphorgipsherstellung eingesetzt werden: 1. Kalzinierung, 2. Flotation, 3. Umwandlung in Mono-Kalzium-Phosphat oder Di-Kalzium-Phosphat mit Hilfe anorganischer Säuren. Die genannten Verfahren sind dem Fachmann bekannt und sind z.B. beschrieben in Physical and thermal treatment of phosphate ores - An overview; Int. J. Miner. Process. 85 (2008) 59-84; Abdel-Zaher M. Abouzeid; The Fertilizer Manual 3rd Edition; herausgegeben von UNIDO & IFDC, Ausgabe 1998; ISBN: 0792350324 9780792350323; Sowie Pyroprocessing for the minerals industry; Thyssenkrupp Polysius; Kennung: 1625/D (1.0 12.11 Stu).

Pro Tonne produzierter Phosphorsäure werden je nach Produktionsverfahren 4 bis 5 Tonnen Kalziumsulfat produziert. Auf Grund der naturgemäß unterschiedlichen Qualitäten/Zusammensetzungen der Phosphaterze und der unterschiedlichen Verfahrensparameter zur Herstellung von Phosphorsäure werden auch entsprechend unterschiedliche Qualitäten an Kalziumsulfaten produziert.

Die erhöhten Anforderungen zur Handhabung des produzierten Kalziumsulfates bzw. Phosphorgips stellen die Phosphorsäure produzierende Industrie vor komplexe Herausforderungen. Schätzungen für die Lagerung von Phosphorgips auf Lebenszeit gehen von bis zu 25 Dollar/t Gips für die produzierenden Unternehmen aus.

Als Beispiel zur möglichen kommerziellen und großtechnischen Verwendung von Kalziumsulfat/Phosphorgips wird in der Literatur vielfach die Umsetzung von Phosphorgips in Zementklinker bzw. Zement und SOz bzw. Schwefelsäure genannt. Die Umsetzung von Gips und Phosphorgips in Zement und Schwefelsäure nach dem Müller-Kühne-Prozess oder nach dem OSW-Krupp-Prozess sind seit langem bekannt, siehe z.B. die Patentschriften AT 284701 B oder AT 292539 B.

DE 3222721 C2 beschreibt auf Grundlage des Müller-Kühne-Prozesses ein verbessertes Verfahren durch eine vorgeschaltete Teilentwässerung des Gipses durch Zentrifugieren mit nachgeschalteter zweistufiger Trocknung, wobei das aus der ersten Trocknungsstufe austretende SO₂-haltige Abgas direkt in den Gaswäscher der Schwefelsäureanlage eingeleitet wird. Das beschriebene Verfahren nimmt keinen Bezug auf Qualität des Phosphorgips hinsichtlich bestimmter Komponenten und auch keinen Bezug auf die Qualität des SOz-Abgases für die angedeutete, nachgeschaltete Schwefelsäureanlage.

Kandil et al., Journal of Radiation Research and Applied Sciences; 10; 2017, beschreiben ein Verfahren zur Herstellung von Ammoniumsulfat aus Phosphorgips, in dem in einem ersten Schritt Schwefelsäure zur Auslaugung von P₂O₅, F, Lanthaniden und weiteren Bestandteilen eingesetzt wird. Das beschriebene Verfahren steht in keinem Zusammenhang mit der Umwandlung von Phosphorgips in Zementklinker und Schwefelsäure.

EP 0041761 A1 betrifft im Zusammenhang mit der Umwandlung von Phosphorgips in Zementklinker und SO₂-Gas ausschließlich die Umkristallisation von Kalziumsulfat-dihydrat nach Kalziumsulfat-anhydrit. Es können P₂O₅-Gehalte von unter 0,01 Gewichts-% und Fluor-Gehalte von unter 0,05 Gewichts-% im Kalziumsulfat-anhydrit erzielt werden. Aus dem so gewonnenen Anhydrit können bei hohen Temperaturen Kalziumkomponenten und Schwefeldioxid gewonnen werden. Die Möglichkeit zur Rückführung von verbrauchter Schwefelsäure in den Phosphorsäureprozess wird erwähnt, jedoch werden Einflussfaktoren wie Korngröße des Gipses sowie Feststoff zu Flüssigkeit-Verhältnis (S/L), die direkten Einfluss auf die Wasserbilanz im Phosphorsäurekomplex haben, nicht berücksichtigt.

GB 120991 beschreibt die Herstellung von Zement nach dem Müller-Kühne-Verfahren auf Basis von Kalziumsulfat-Hemihydrat, das durch Rekristallisation von Kalziumsulfat-Dihydrat bei der Phosphorsäureproduktion hergestellt wird. Heute ist diese Art des Verfahrens als sogenanntes DHH (Dihydrat-Hemihydrat)-Verfahren bekannt. Des Weiteren wird die Herstellung von Schwefelsäure und Portlandzement auf Basis des Hemihydrats beschrieben. Die Behandlung des Kalziumsulfats mit einer Säure nach der Abtrennung von der Phosphorsäure wird nicht beschrieben.

US 3547581 betrifft ein Verfahren zur Aufbereitung von gefiltertem Gips aus der Phosphorsäureproduktion, bei dem der Gips nach Zugabe von Silika und Schwefelsäure auf Temperaturen von 200°C bis 400°C aufgeheizt wird und zu Hemihydrat bzw. Anhydrit kalziniert. Das erhaltene Produkt wird mit Wasser gewaschen, wodurch die Gehalte von Phosphat und Fluoriden im Gips reduziert werden können. Es handelt sich aufgrund der erforderlichen hohen Temperaturen um ein energieintensives Verfahren, welches eine Vielzahl an Prozessschritten umfasst. Zudem erfordert das Verfahren nach US3547581 die Erwärmung und Zugabe von Silika im Vergleich zum hier vorgestellten erfindungsgemäßen Prozesskonzept. Die Herstellung einer Suspension durch Zugabe von Säure zu Kalziumsulfat wird nicht beschrieben.

DE 1671215 betrifft ein Verfahren zur Herstellung von Schwefelsäure und Zement aus Abfall-Kalziumsulfat, wie Phosphorgips, das die Herstellung des Rohmehles behandelt.

DE 1912183 beschreibt ein Verfahren zur Herstellung von fluorarmem Zementklinker aus Phosphorgips, bei dem das Fluor im Phosphorgips durch Erhitzen des Abfallgips in feingemahlenem Zustand auf Temperaturen zwischen 500 und 900°C selektiv reduziert wird.

US 4415543 beschreibt ein Verfahren, bei dem der Gehalt an Fluoriden und Phosphaten in Phosphorgips durch Waschen mit Wasser und anschließender Erhitzung reduziert wird.

Die Gewinnung von Schwefeldioxid unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und durch Filtration abgetrennt wird ist prinzipiell bekannt.

Im Herstellungsprozess für Zement aus Phosphorgips/Kalziumsulfat wird der Schwefel aus dem Kalziumsulfat/Phosphorgips in Form von gasförmigen Schwefeldioxid freigesetzt und mit dem Abgas aus dem Klinkerprozess vermischt ausgetrieben.

Bei der herkömmlichen/traditionellen Zementherstellung wird das entstehende Abgas nach Nutzung der Abwärme entstaubt, bevor es über Kamine in die Umgebung emittiert wird. Hier werden Gehalte an Staubpartikeln im Abgas von 5mg/m³ bis 100mg/m³ emittiert.

Für den Einsatz des Schwefeldioxid-haltigen Abgases aus der Klinkerherstellung aus Phosphorgips/Kalziumsulfat als Basismaterial für die Schwefelsäureproduktion ist die Einhaltung von Konzentrationen für Komponenten, die die Schwefelsäureproduktion nachteilig beeinflussen können, notwendig. Hierzu zählen neben den Staubpartikeln auch Komponenten, die sich im Schwefelsäureprozess nachteilig auswirken können.

So offenbart die CN102502524B ein Verfahren zur Herstellung von Schwefeldioxid aus Kalziumsulfat (aus Phosphorgips) und elementarem Schwefel. Das Ausgangsmaterial ist dabei Phosphorgips, der zunächst durch Wärmebehandlung in Hemihydratgips umgewandelt wird, zusammen mit Zuschlagsstoffen vermischt wird und unter Verbrennung von elementarem Schwefel in Schwefeldioxid und Kalziumoxid umgewandelt wird. Das Schwefeldioxid kann nach Aufreinigung zur Produktion von Schwefelsäure genutzt werden.

Die CN1948131A offenbart ein Verfahren, mit dem aus niedrig konzentriertem Schwefeldioxidabgas aus der thermischen Zersetzung von Phosphorgips aus der Phosphorsäureproduktion unter Beimischung von hochkonzentriertem Schwefeldioxidgas aus der Verbrennung von elementarem Schwefel Schwefelsäure hergestellt werden kann.

Aus der US 4 312 842 A ist ein Verfahren zur Herstellung von Phosphorsäure mit Rückgewinnung der Nebenprodukte bekannt.

Aus der US 4 608 238 A ist ein Verfahren zur Behandlung von Phosphorgipsabfällen aus der Phosphorsäureherstellung bekannt.

Aus der US 4 415 543 A ist ein Verfahren zur Behandlung von Phosphorgipsabfällen aus der Phosphorsäureherstellung bekannt.

Aus der CA 828060 A ist die Produktion von Schwefelsäure bekannt.

Generell werden in der Literatur lediglich die jeweiligen Einzelprozesse wie Aufbereitung des Phosphorgipses, thermische Zersetzung des Phosphorgipses in Zementklinker und Schwefeldioxid beschrieben. Nur vereinzelt werden mögliche Zusammenhänge mit vor- und/oder nachgeschalteten Prozessen erwähnt.

Die Aufgabe der vorliegenden Erfindung besteht darin, ein Verfahren zur Verwendung von bei der Phosphorsäureproduktion entstehendem Kalziumsulfat (Phosphorgips) zur Herstellung von Wertprodukten bereitzustellen, das im industriellen Maßstab verwendet werden kann, um die umweltbedingten und wirtschaftlichen Anforderungen zu erfüllen.

Die der Aufgabe zugrundeliegende Erfindung ist zum anderen ein Verfahren bereitzustellen, bei dem das bei der Klinkerherstellung anfallende Schwefeldioxidhaltige Abgas hinsichtlich der möglichen Inhaltsstoffe, die die kommerziell genutzten Prozesse zur Schwefelsäureproduktion nachteilig beeinflussen können, aufbereitet wird. Der Vorteil dieses Verfahrens liegt in der Flexibilität der Anwendung der auf die jeweilige Zusammensetzung des SOz-haltigen Abgases erforderlichen Aufbereitungsschritte. Bedingt durch das mögliche Vorhandensein von Verunreinigungen wie Staub, Chloride, Fluoride, Arsen, Quecksilber, Selen, Stickoxide etc. muss ein individuelles Gasreinigungskonzept aufgestellt werden.

Diese Aufgabe wird erfindungsgemäß durch ein Verfahren gemäß Patentanspruch 1 gelöst. Insbesondere wird die Aufgabe gelöst durch ein Verfahren zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei das Verfahren folgende Schritte umfasst:
a) das von der Phosphorsäure abgetrennte Kalziumsulfat wird mit einer Säure behandelt, um eine Suspension mit gereinigtem Kalziumsulfat zu erhalten,
b) das gereinigte Kalziumsulfat wird als Feststoff von der flüssigen Phase der erhaltenen Suspension abgetrennt,
c) das abgetrennte gereinigte Kalziumsulfat wird mit Zusatzstoffen und Reduktionsmittel vermischt, um eine Rohmehlmischung für die Zementklinkerproduktion zu erhalten,
d) die Rohmehlmischung wird gebrannt, um den Zementklinker zu erhalten, wobei Schwefeldioxid als Abgas gebildet wird,
e) das gebildete Schwefeldioxid einer Abgasreinigung unterworfen wird und
f) als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann.

Das erfindungsgemäße Verfahren ist insbesondere ein integriertes Verfahren. Der integrative Ansatz als Gesamtkonzept vom Phosphorgips zum Zementklinker und Schwefeldioxid bei dem integrierten Verfahren ermöglicht die Abstimmung der Abhängigkeiten/Einflussfaktoren zur optimierten Verfahrenswahl und damit verbunden die einhergehende Flexibilität der Prozessführung mit der Möglichkeit, in bestehende Phosphorsäure- und Schwefelsäureanlagenkomplexe eingebunden zu werden. So können alle Prozessparameter und Verfahrensstufen des Gesamtkomplexes zur Erzielung spezifischer Produktqualitäten ausgehend von einer variablen Eduktbeschaffenheit, wie z.B. der Eduktbeschaffenheit von dem in der Phosphorsäureproduktion eingesetzten Apatit oder dem Phosphorgips der aktuellen Produktion bzw. der Halde aufeinander abgestimmt werden. Dies wurde bis heute nicht betrachtet. Die Merkmalskombinationen des erfindungsgemäßen integrativen Verfahrens lassen sich aus dem Stand der Technik nicht herleiten.

Im Folgenden werden in diesem Zusammenhang die Ausdrücke Komplex und Anlage austauschbar verwendet. Die in Schritt b) erhaltene abgetrennte flüssige Phase kann in die Reaktionseinheit der Phosphorsäureproduktion als Einsatzstoff eingebracht werden.

Als Vorteile des erfindungsgemäßen Verfahrens, insbesondere des integrierten Verfahrens können insbesondere folgende Punkte genannt werden:
1. Einsatz des produzierten Kalziumsulfates/Phosphorgips als Rohstoff zur Herstellung von Wertprodukten
2. Umwandlung des Kalziumsulfates/Phosphorgips in Zementklinker als Rohstoff für die Zementproduktion und Schwefeldioxid als Rohmaterial für die Schwefelsäureproduktion
3. Reduzierung der Auswirkungen durch Kalziumsulfat-/Phosphorgips-Deponierung und/oder Verklappung auf die Umwelt
4. Rückgewinnung und Zirkulation des eingesetzten Schwefels im Phosphorsäureprozess und/oder einer weiteren Nutzung, wodurch lediglich ein Bedarf an zusätzlichem Schwefel zum Ausgleich von Verlusten im Gesamtprozess entsteht. Allgemeine Ausführungsbeispiele sind eine Kreislaufführung der Schwefelsäure oder die Nutzung von Phosphorgips aus Halden. In letzteren Fall muss Schwefelsäure exportiert werden, da durch die Zufuhr von Phosphorgips aus externen Quellen, insbesondere Halden, ein Schwefelüberschuss im Gesamtprozess resultiert. Ein Ausgleich des Schwefelhaushaltes ist daher insbesondere nur im Rahmen der Kreislaufführung von Schwefelsäure nötig
5. Erhöhung der Ausbeute an Phosphor aus dem Rohphosphat, damit bessere Verwertung des eingesetzten Rohphosphats zum Zweck der Phosphorsäureproduktion
6. Reduzierung des CO2-Footprints durch den Einsatz von Kalziumsulfat/Phosphorgips als Rohmaterial für die Zementklinkerherstellung
7. Integrativer Einsatz bestehender Anlagenkomponenten des Phosphor- und Schwefelsäurekomplexes, damit reduzierter zusätzlicher Investitionsaufwand

Der hier beschriebene Ansatz des integrierten Verfahrens kann in 5 Kategorien von Herstellprozessen zusammengefasst werden:
- Herstellung von Phosphorgips mit geeigneter Qualität für den Zementklinkerprozess gemäß den Schritten a) und b) des erfindungsgemäßen Verfahrens,
- Herstellung der Rohmehlmischung, die für den Zementklinkerprozess spezifisch ist, gemäß Schritt c) des erfindungsgemäßen Verfahrens,
- Herstellung des Zementklinkers gemäß Schritt d) des erfindungsgemäßen Verfahrens und gegebenenfalls Weiterverarbeitung des Zementklinkers zu Zement,
- Herstellung von Schwefeldioxidgas mit einer Qualität, die für den Schwefelsäureprozess geeignet ist, gemäß Schritt d) des erfindungsgemäßen Verfahrens, wobei das Schwefeldioxidgas gegebenenfalls noch einer Abgasreinigung zu unterwerfen ist, bevor es Schritt e) zugeführt wird,
- Herstellung der Schwefelsäure gemäß Schritt f) des erfindungsgemäßen Verfahrens.

Das erfindungsgemäße Verfahren zur Herstellung von Schwefelsäure und Zementklinker unter Verwendung von Kalziumsulfat ist bevorzugt in eine Phosphorsäureproduktion integriert. Bei der Phosphorsäureproduktion handelt es sich um ein übliches Nassverfahren, bei der Rohphosphat mit Schwefelsäure umgesetzt bzw. aufgeschlossen wird, um Phosphorsäure (Aufschlussphosphorsäure) zu bilden.

Als Rohphosphat werden sedimentäre und magmatische Phosphatgesteine verwendet, die in der Regel vor dem Einsatz aufbereitet werden. Die Aufbereitung schließt üblicherweise ein Zerkleinern und Aufkonzentrieren hinsichtlich des Phosphorgehalts ein. Zur Aufbereitung kann Phosphaterz oder Phosphatgestein, insbesondere Apatit-haltiges Erz, z.B. einer Kalzinierung, Flotation und/oder Umwandlung in Mono-Kalzium-Phosphat oder Di-Kalzium-Phosphat mit Hilfe anorganischer Säuren, unterworfen werden.

Die Herstellung von Phosphorsäure nach dem Nassverfahren ist dem Fachmann allgemein bekannt. Allgemeine Beschreibungen des Verfahrens finden sich z.B. in Ullmann's Encyclopedia of industrial chemistry, 5. Auflage, 1991, Bd. A19, "Phosphoric Acid and Phosphate", S. 465-505.

Die Phosphorsäureproduktionsanlage umfasst bevorzugt eine Aufbereitungseinheit für Phosphatgestein, eine Reaktionseinheit für die Umsetzung von Rohphosphat mit Schwefelsäure sowie eine Filtrationseinheit zur Abtrennung von Kalziumsulfat. In der Regel umfasst die Phosphorsäureproduktionsanlage zusätzlich eine Schwefelsäureproduktionsanlage, so dass sich ein Phosphorsäure-Schwefelsäure-Komplex ergibt.

Für die Herstellung von Zementklinker und Schwefelsäure nach dem erfindungsgemäßen Verfahren kann z.B. Kalziumsulfat bzw. Phosphorgips aus den folgenden, existierenden und dem Fachmann bekannten Prozessen zur Herstellung von Phosphorsäure verwendet werden: 1. Dihydrat (DH)-Prozess, 2. Hemihydrat (HH)-Prozess, 3. Dihydrat-Hemihydrat (DHH)-Prozess, 4. Hemihydrat-Dihydrat (HDH)-Prozess und 5. Dihydrat-Attack-Hemihydrat-Filtration (DA-HF)-Prozess.

Für die vorliegende Erfindung ist einer der obigen fünf Prozesse einzusetzen, wobei bei den Prozessen 3. bis 5. (DHH/HDH/DA-HF) eine Rekristallisation des Kalziumsulfats erfolgt, was für das erfindungsgemäße Verfahren nicht erforderlich ist.

Nach dem erfindungsgemäßen Verfahren wird in Schritt a) das Kalziumsulfat, welches beispielsweise nach einem der obig genannten fünf Verfahren erhalten wurde, nach Abtrennung aus der Phosphorsäureproduktion mit einer Säure behandelt, wodurch die P₂O₅-Ausbeute erhöht wird.

Das aus der Phosphorsäureproduktion abgetrennte Kalziumsulfat wird somit vor Zuführung zu Schritt a) bevorzugt keiner Rekristallisation unterworfen.

Bei dem Verfahren der Phosphorsäureproduktion wird bei der Umsetzung von Rohphosphat mit Schwefelsäure zur Bildung von Phosphorsäure Kalziumsulfat als festes Nebenprodukt gebildet, das von der Phosphorsäure abgetrennt wird. Die Abtrennung kann z.B. durch Zentrifugieren, Filtrieren, Absetzen oder Eindampfen erfolgen, wobei eine mechanische Abtrennung bevorzugt ist. Das feste Kalziumsulfat wird bevorzugt durch Filtration von Phosphorsäure abgetrennt. Die Abtrennung umfasst oder besteht aus der Abtrennung von dem gebildeten Kalziumsulfat von der Phosphorsäure (Produktsäure) (erste Trennung), bevorzugt durch Filtration. Je nach Prozess kann der durch die erste Trennung abgetrennte Kalziumsulfat-Feststoff (bevorzugt Filterkuchen) gegebenenfalls noch einer oder mehreren Waschungen mit Flüssigkeit, insbesondere Wasser, mit anschließender Abtrennung, bevorzugt Filtration, der Flüssigkeit unterworfen werden.

Für das von der Phosphorsäure abgetrennte Kalziumsulfat, das in Schritt a) eingesetzt wird, kann das direkt nach der ersten Trennung von der Phosphorsäure erhaltene Kalziumsulfat verwendet werden, da eine weitere Waschung nicht zwingend erforderlich ist. Dadurch wird eine Reduktion der Filterfläche im Phosphorsäure-Prozess ermöglicht. Es ist aber auch möglich, für das von der Phosphorsäure abgetrennte Kalziumsulfat, das in Schritt a) eingesetzt wird, Kalziumsulfat zu verwenden, das nach der ersten Trennung von der Phosphorsäure einer oder mehreren Wäschen mit einer Flüssigkeit, vorzugsweise Wasser, unterworfen wurde, bevor es Schritt a) zugeführt wird.

Alternativ kann auf Halden gelagertes Kalziumsulfat aus der Phosphorsäureproduktion als das Kalziumsulfat verwendet werden, das in Schritt a) eingesetzt wird. Gegebenenfalls muss das Kalziumsulfat der Halden vor der Verwendung in Schritt a) zusätzlich mechanisch vorbehandelt werden. Ferner kann das Kalziumsulfat der Halden vor der Verwendung in Schritt a) durch eine oder mehrere Wäschen mit einer Flüssigkeit, vorzugsweise Wasser, gewaschen werden.

Die Umsetzung von Rohphosphat mit Schwefelsäure findet in dem Phosphorsäureproduktionskomplex in der Reaktionseinheit der Phosphorsäureanlage statt. Das erhaltene Reaktionsgemisch wir dann zur der Trenneinheit, bevorzugt Filtrationseinheit, der Phosphorsäureanlage gefördert, wo die Phosphorsäure von dem gebildeten Kalziumsulfat in einer oder mehreren Trennstufen abgetrennt bzw. abfiltriert wird. Das Kalziumsulfat für den Einsatz in der Stufe a) wird der Trenneinheit bzw. Filtrationseinheit entnommen, bevorzugt aus der ersten Trennstufe, und/oder als Kalziumsulfat für den Einsatz in der Stufe a) wird auf Halden gelagertes Kalziumsulfat aus der Phosphorsäureproduktion verwendet.

Das abgetrennte Kalziumsulfat, das in Schritt a) eingesetzt wird, ist bevorzugt Kalziumsulfat in Form von Dihydrat, Hemihydrat oder einer Kombination davon.

In Schritt a) des erfindungsgemäßen Verfahrens wird das abgetrennte Kalziumsulfat aus der Phosphorsäureproduktion mit einer Säure behandelt. Die Säure wird dem Kalziumsulfat zugegeben, um die Behandlung durchzuführen. Auf diese Weise wird nach der Behandlung eine Suspension mit gereinigtem Kalziumsulfat erhalten. Bei der erhaltenen Suspension kann es sich z.B. um einen Schlamm bzw. eine Aufschlämmung handeln. Durch die Behandlung können die Verunreinigungen im Kalziumsulfat, die den nachgeschalteten Zementklinkerprozess und die Zementqualität negativ beeinflussen, auf den vom nachgelagerten Zementklinkerprozess geforderten Gehalt reduziert werden.

Zur Behandlung des Kalziumsulfats in Schritt a) wird eine Säure zugegeben. Die Säure ist bevorzugt eine verdünnte Säure. Verdünnte Säuren sind Säuren, die mit Wasser verdünnt sind (wässrige Säuren). Die Säure, bevorzugt die verdünnte Säure, ist vorzugsweise eine anorganische Säure, z.B. Salzsäure, Salpetersäure, schweflige Säure und/oder Schwefelsäure, wobei schweflige Säure und/oder Schwefelsäure besonders bevorzugt sind.

In Schritt a) wird die Säure bevorzugt in einer solchen Menge zugegeben, dass das Verhältnis von Feststoff zu Flüssigkeit (S/L-Verhältnis) in der Suspension im Bereich von 1/10 bis 1/1, bevorzugt 1/5 bis 1/1, bevorzugter 1/5 bis 1/1,3, noch bevorzugter 1/4 bis 1/2 liegt. Das Verhältnis von Feststoff zu Flüssigkeit (S/L-Verhältnis) bezieht sich auf die Masse des Feststoffs in Kilogramm und das Volumen der Flüssigkeit in Liter bei einer Bezugstemperatur von 20°C.

Die Konzentration der eingesetzten Säure wird dabei so gewählt, dass die aus der Behandlung nach Schritt a) resultierende Säure z.B. im Bereich von 1 bis 12 molar, vorzugsweise im Bereich von 3 bis 10 molar, bevorzugter im Bereich von 5 bis 8 molar, liegt, wobei es sich um eine wässrige Säure handelt. Unter 1 molar wird dabei 1 mol Säure pro 1 Liter Lösung bei 20 °C verstanden. Da das zu behandelnde Kalziumsulfat Wasser enthalten kann, kann die Konzentration der zugesetzten Säure höher sein als die Konzentration der nach der Zugabe resultierenden Säure. In allgemeinen liegt die Molarität der zugesetzten Säure bevorzugt in den Bereichen, die vorstehend und nachstehend für die resultierende Säure genannt wird.

Die aus der Behandlung nach Schritt a) resultierende Säure ist bevorzugt eine 1 bis 12 molare, bevorzugt 5 bis 8 molare schweflige Säure oder eine 1 bis 12 molare, bevorzugt 5 bis 8 molare Schwefelsäure ist. Die zugegebene Säure ist daher bevorzugt eine schweflige Säure oder eine Schwefelsäure.

Die Behandlung in Schritt a) wird z.B. bei Reaktionstemperatur im Bereich zwischen Umgebungstemperatur und Siedepunkt des Reaktionsgemisches durchgeführt, z.B. bei einer Temperatur im Bereich von 15°C bis 100°C, vorzugsweise 30°C bis 80°C, bevorzugter 45 bis 75°C.

Die Dauer der Behandlung in Schritt a) bzw. die Reaktions-Verweilzeit für die Einstellung der Gehalte an Verunreinigungen in der Säure liegt z.B. im Bereich von 5 Minuten bis 120 Minuten, bevorzugt von 15 bis 100 Minuten, insbesondere 15 bis 90 Minuten, besonders bevorzugt 20 bis 60 Minuten.

Während der Behandlung von Schritt a) wird die Suspension bzw. das Reaktionsgemisch zur der Einstellung der Gehalte an Verunreinigungen bevorzugt in Bewegung gehalten, zum Beispiel durch Zirkulieren, Rühren oder Einblasen von Gas.

Für den Schritt a) wird das in der Phosphorsäureproduktion generierte Kalziumsulfat aus der Trenneinheit, bevorzugt Filtrationseinheit, der Phosphorsäureproduktion einer Kalziumsulfat-Reaktionseinheit oder das Kalziumsulfat von einer Halde aus der Phosphorsäureproduktion zugeführt. Dort wird das Kalziumsulfat mit der zugesetzten Säure behandelt. Bei der Kalziumsulfat-Reaktionseinheit kann es sich um eine einfache Rühreinrichtung handeln, z.B. Rührbehälter.

In Schritt b) des erfindungsgemäßen Verfahrens wird das gereinigte Kalziumsulfat nach der Behandlung als Feststoff von der flüssigen Phase der erhaltenen Suspension abgetrennt. Bei der erhaltenen Suspension kann es sich um eine Aufschlämmung handeln. Die Abtrennung von Feststoff bzw. gereinigtem Kalziumsulfat und flüssiger Phase aus der Suspension ist insbesondere eine mechanische Trennung und kann z.B. durch Zentrifugation oder Filtration erfolgen, wobei Filtration bevorzugt ist.

Das in Schritt b) erhaltene gereinigte Kalziumsulfat, wie es nach der Abtrennung erhalten wird, kann Dihydrat, Hemihydrat, Anhydrit oder in Form einer Mischung aus zumindest zwei der besagten Komponenten vorliegen, bevorzugt ist Kalziumsulfat in Form von Anhydrit. Die gewünschte Zusammensetzung des Kalziumsulfates ist abhängig von dem erforderlichen Maß der P₂O₅-Reduktion, wobei ein Zement-/Klinkerproduzent das erforderliche Maß der P₂O₅-Reduktion bestimmt. Durch die Behandlung mit Säure und anschließender Abtrennung von der flüssigen Phase kann insbesondere der Gehalt an Phosphor und Fluor im Kalziumsulfat reduziert werden, die als Verunreinigungen enthalten sind. Bei der abgetrennten flüssigen Phase handelt es sich in der Regel um eine säurehaltige wässrige Lösung, enthaltend unter anderem Wasser und P₂O₅.

Erfindungsgemäß enthält das in Schritt b) erhaltene abgetrennte gereinigte Kalziumsulfat mindestens 5 Gew.-%, bevorzugt mindestens 30 Gew.-%, erfindungsgemäß mindestens 50 Gew.-% Anhydrit, bezogen auf trockenes Kalziumsulfat.

Der Dᵥ(50)-Wert der Korngrößenverteilung des in Schritt b) produzierten Kalziumsulfats, insbesondere Kalziumsulfat-Anhydrits, nach der Aufreinigung beträgt z.B. 0,5 - 100µm, besonders bevorzugt 1 - 50µm, insbesondere 2 - 30µm. Definiert wird der Dᵥ(50)-Wert als Maß, bei welchem 50Vol.-% der Partikel einen größeren Durchmesser als den angegebenen Wert aufweisen.

In einer bevorzugten Ausführungsform wird in Schritt b) die flüssige Phase, die nach Abtrennung des Feststoffs erhalten wird, als Einsatzstoff in der Phosphorsäureproduktion verwendet. Die flüssige Phase bzw. das Filtrat kann in der existierenden Phosphorsäureproduktion, insbesondere in dem existierenden Phosphorsäure-Schwefelsäure-Komplex, verwendet werden als sogenannte "Recycle Acid" (Rücklaufsäure), die der Reaktionseinheit der Phosphorsäureproduktion für die Umsetzung mit dem Rohphosphat zugeführt werden kann.

Für den Schritt b) wird die in der Kalziumsulfat-Reaktionseinheit enthaltene Suspension/Aufschlämmung in eine Kalziumsulfat-Trenneinheit überführt, in der die Flüssigkeit und der resultierende Feststoff (gereinigtes Kalziumsulfat) voneinander getrennt werden können. Die Trenneinheit kann z.B. eine Filtrationseinheit oder eine Zentrifugeneinheit sein, wobei eine Filtrationseinheit bevorzugt ist.

Als abgetrenntes gereinigtes und aufbereitetes Kalziumsulfat kann direkt das in Schritt b) erhaltene abgetrennte gereinigte Kalziumsulfat verwendet werden. Es ist aber auch möglich, dass das in Schritt b) erhaltene gereinigte Kalziumsulfat einer oder mehreren weiteren Reinigungsschritten unterworfen wird, insbesondere zur Entfernung von Seltenen Erden und gegebenenfalls zur Entfernung von radioaktiven Elementen und/oder Schwermetallen, wie z.B. Cd, Pb, Hg, bevor das gereinigte Kalziumsulfat dem Schritt c) zugeführt wird. Die optionalen zusätzlichen Reinigungsschritte werden nachstehend erläutert.

Das in Schritt c) verwendete gereinigte Kalziumsulfat weist bevorzugt einen P₂O₅-Gehalt von weniger als 0,5 Gew.-%, bevorzugt weniger als 0,25 Gew.-%, bevorzugter weniger als 0,05 Gew.-%, und einen Fluoridgehalt von weniger als 0,5 Gew.-%, bevorzugt weniger als 0,25 Gew.-%, bevorzugter weniger als 0,15 Gew.-%, noch bevorzugter von weniger als 0,05 Gew.-% auf. Ein gereinigtes Kalziumsulfat mit dem genannten Reinigungsgrad hinsichtlich P₂O₅ und Fluor wird bevorzugt bereits nach Schritt b) erhalten. Durch den Reinigungsschritt gemäß der Schritte a) und b) und gegebenenfalls dem Reinigungsschritt zur Entfernung von Seltenen Erden können gegebenenfalls auch im Kalziumsulfat enthaltene, unerwünschte Schwermetalle und/oder radioaktive Elemente, insbesondere radioaktive Elemente, vollständig oder teilweise entfernt werden.

In Schritt c) des erfindungsgemäßen Verfahrens wird das abgetrennte gereinigte und aufbereitete Kalziumsulfat mit Zusatzstoffen und Reduktionsmittel vermischt, um eine Rohmehlmischung für die Zementklinkerproduktion zu erhalten. Das Kalziumsulfat wird dabei mit den erforderlichen Zusatzstoffen für die geforderte Zementklinkerqualität im richtigen Verhältnis vermischt. Wie bereits angeführt, sind der Müller-Kühne-Prozess und der OSW-Krupp-Prozess für die Umsetzung von Kalziumsulfat mit Zusatzstoffen und Reduktionsmittel zu Zementklinker und SOz bzw. Schwefelsäure seit langem bekannt. Weitere Einzelheiten hierzu können der Fachliteratur entnommen werden, z.B. Ullmann's Encyclopedia of industrial chemistry, 5. Auflage, 1986, Bd. A5, "Cement and Concrete ", p. 489-537, oder die Patentschrift AT 292539 B. Allgemein wird Zementklinker aus einem als Rohmehl bezeichnetes Rohstoffgemisch hergestellt, dass Calciumoxid, Siliciumdioxid sowie Oxide von Aluminium und Eisen enthält, siehe z.B. Ullmann's Encyclopedia of industrial chemistry, 5. Auflage, 1986, Bd. A5, "Cement and Concrete", S. 489-537 oder der Patentschrift AT 292539 B.

Komponenten zur Herstellung des Rohmehls in Schritt c) können, neben gereinigtem Phosphorgips/Kalziumsulfat, die dem Fachmann bekannten Zusatzstoffe für die Klinkerzusammensetzung sein, die dem Kalziumsulfat zugemischt werden, wobei in der Rohmehlmischung die Kalziumkomponente vollständig von dem abgetrennten gereinigten Kalziumsulfat gebildet wird. Vollständig schließt hier nicht aus, dass Kalzium in geringen Mengen oder als Verunreinigungen in den Zusatzstoffen enthalten sein können. Vollständig meint hier, dass mindestens 95%, bevorzugter mindestens 99%, noch mehr bevorzugt mindestens 99,9% des im Zementklinker enthaltenen Kalziums aus dem abgetrennte gereinigte Kalziumsulfat stammen. Daraus ergibt sich, das die eingesetzten Zusatzstoffe frei bzw. weitgehend frei von Kalzium sind. Zusatzstoffe sind insbesondere Al-Träger, wie z.B. Bauxite, Tone und Tonsteine, Schiefer, etc., Fe-Träger, wie z.B. Eisenerze, Laterite, etc. und Si-Träger, wie z.B. Sande, Sandsteine, Quarzite, Tone und Tonsteine, Schiefer, etc. und ein oder mehrere Reduktionsmittel, wie z.B. einen Kohlenstoff- und/oder Kohlenwasserstoff-Träger, z.B. Kohle, Koks, Petrolkoks oder aus nachwachsenden Rohstoffen erzeugte Kohle/ Koks (Bio-Kohle/Koks) und/oder elementarer Schwefel.

Es versteht sich, dass die Art und die Menge der Zusatzstoffe so gewählt werden, dass sie zusammen mit dem Kalziumsulfat ein Rohmehl mit geeigneter chemischer Zusammensetzung für einen Zementklinker ergeben.

Als Brennstoff eignen sich feste Brennstoffe, beispielsweise Kohle, Koks, Petrolkoks, feste Sekundärbrennstoffe, etc. sowie flüssige Brennstoffe, beispielsweise Öl, Schweröl, flüssige Sekundärbrennstoffe, etc. oder gasförmige Brennstoffe, beispielsweise Erdgas, Biogas, Wasserstoff, als auch eine Kombination aus vorgenannten Brennstoffen.

Additive und / oder Mineralisatoren zur beschleunigten Zersetzung des gereinigten Kalziumsulfates und / oder zur verbesserten Bildung von Klinkermineralien können ebenfalls zugesetzt werden.

Als Rohmehl für die Herstellung von Zementklinker wird die Mischung der Stoffe Kalziumsulfat, alle zementüblichen Zusatzstoffe und Additiven/Mineralisatoren incl. Reduktionsmittel bezeichnet.

Für die Rohmehlvorbereitung in Schritt c) wird das gereinigte Kalziumsulfat vorzugsweise auf eine gewünschte Restfeuchte getrocknet, z.B. in einem Trommeltrockner und/oder Flugsstromtrockner und/oder Wirbelschicht, wobei der Wassergehalt des getrockneten Kalziumsulfats z.B. unter 22 Gew.-%, bevorzugt 12 - 14 Gew.-%, bevorzugter unter 5 Gew.-%, noch mehr bevorzugt unter 1 Gew.-% liegt. Der Wassergehalt bezieht sich hier nur auf freies Wasser, eventuell vorhandenes Hydratwasser ist nicht berücksichtigt.

Das getrocknete Kalziumsulfat sowie alle übrigen Zusatzstoffe werden einem üblichen Lager und/oder Mischeinrichtung zugeführt. Hierfür kommen beispielsweise ein Längsmischbett und/oder Rundmischbett und/oder Wannenlager und/oder Freilager und/oder herkömmliche Silos, wie Tangentialmischsilo, Mehrzellensilo, Konussilo oder Mehrkammersilo zur Anwendung. Beispielsweise wird ein solches Mischbett in der DE 10252585 bzw. solche Silotypen die in der DE10118142 oder DE 10344040 näher beschrieben werden.

Die Rohmaterialien (Kalziumsulfat sowie Zusatzstoffe) werden separat oder gemeinsam auf die für den Klinkerprozess notwendige Feinheit vermahlen. Diese Zerkleinerung kann als Mahltrocknung ausgeführt werden, bei der Abwärme aus dem Prozess (z.B. vorgewärmte Gase) und / oder speziell zugeführte Wärme (z.B. Abgase eines Heißgaserzeugers) genutzt werden.

Für die Zerkleinerung kommen Zerkleinerungsaggregate wie wenigstens eine Vertikalrollenmühle und/oder eine Walzenpresse und/oder eine Rührwerkskugelmühle und/oder Kugelmühle und/oder Walzenschüsselmühle und/oder Stabmühle und/oder Magnetmühle zum Einsatz. Entsprechende Aggregate sind beispielsweise aus den Schutzrechten DE 102012111217, DE 102014108334 oder DE 102017114831 bekannt.

Die vermahlenen Rohmaterialien werden gemeinsam oder getrennt einem oder mehreren Silos zur Zwischenlagerung und / oder Homogenisierung zugeführt.

Die chemische Zusammensetzung der Rohmehlmischung wird vor Aufgabe auf den Klinkerprozess kontinuierlich überprüft und in Fall von Abweichungen von vorgegebenen Sollwerten durch Änderungen der Dosierungen korrigiert.

Das so vorbehandelte Rohmehl wird dosiert in die Klinkeranlage aufgegeben, ggf. zusammen mit Reduktionsmittel.

Das Reduktionsmittel dient zur Unterstützung der Abspaltung von SO2 bei der thermischen Zersetzung des gereinigten Kalziumsulfates. Das Reduktionsmittel wird separat auf die notwendige Feinheit gebrochen und / oder vermahlen. Diese Zerkleinerung kann als Mahltrocknung ausgeführt werden. Das so vorbereitete Reduktionsmittel wird zusammen mit dem vorbehandelten Rohmehl der Klinkeranlage und/ oder separat an einer oder mehreren Stellen der Klinkeranlage zugeführt.

Alternativ kann das Rohmehl bei einem Flüssigkeitsanteil der Mischung von 9 Gew.-% - 22 Gew.-%, vorzugsweise zwischen 12 Gew.-% - 14 Gew.-%, einer formgebenden Einrichtung zur Erzeugung von Agglomeraten zugeführt werden. Diese Agglomerate können in einer separaten Einrichtung getrocknet und zwischengelagert werden. Das so agglomerierte Rohmehl wird dann der Vorwärmeinrichtung und dem Brennprozess zugeführt. Die Agglomerate weisen eine Größe von mehr als 250µm, vorzugsweise mehr als 500µm bis in den niedrigen mm Bereich auf. Als formgebenden Einrichtung können beispielsweise fungieren eine Presse und/oder ein Teller und/oder eine Trommel und/oder ein mechanischer Wirbelbettreaktor und/oder ein formgebender Rührwerksmischer.

In Schritt d) des erfindungsgemäßen Verfahrens wird das Rohmehl, das in Schritt c) hergestellt wird, durch einen thermischen Prozess, insbesondere in einer Zementklinker-Prozesseinheit, in Zementklinker umgewandelt, wobei Schwefeldioxid als Abgas gebildet wird. Der in Schritt d) erzeugte Zementklinker kann zur Zementherstellung verwendet werden.

In Schritt d) wird das Rohmehl vorzugsweise mit Prozessgasen aus dem Brenn- bzw. Kühlprozess zur Verringerung des Energieverbrauchs auf eine Temperatur von bis zu 800°C vorgewärmt und dabei anhaftende Oberflächenfeuchte ausgetrieben und die Zusatzstoffe zumindest teilweise kalziniert.

Bei weiterer Vorwärmung oberhalb von 800°C wird der Hauptteil des Kalziumsulfates unter Einwirkung des Reduktionsmittels unter Bildung von SOz zersetzt.

Die Vorwärmung und Zersetzung des Rohmehls kann z.B. in einem Wärmetauscher, vorzugsweise einem Flugstromwärmetauscher, durchgeführt werden.

Das SOz haltige Prozessgas wird dabei bevorzugt nach der Vorwärmeinrichtung durch ein Abscheidesystem abgesondert und einem Verwertungsprozess wie beispielsweise einer Schwefelsäureanlage zugeführt.

In einem nachfolgenden Schritt erfolgt die finale Zersetzung des Rohmehls und anschließende Bildung des Zementklinkers (Klinkerbrand); die Prozessgase diese Schrittes werden dem Wärmetauscher zugeführt. Dieses Brennen des Rohmehls erfolgt in einem Ofen, vorzugsweise einem Drehrohrofen. Die Brenntemperatur zur Zementklinkerherstellung kann z.B. im Bereich von 1200°C bis 1600 °C liegen, bevorzugt bei einer Temperatur von 1200°C bis zu 1500°C. Die Brenndauer kann z.B. 5 Minuten bis 60 Minuten betragen.

In einer bevorzugten Ausführungsform wird das Rohmehls mit sauerstoffangereicherter Prozessluft, die mehr als 21 Vol.-%, bevorzugt mehr als 45 Vol.-%, bevorzugter mehr als 60 Vol. % und bis zu 100 Vol.- %, Sauerstoff enthält, gebrannt. Entsprechendes Prozessluft kann leicht durch Zumischen von Sauerstoff hergestellt werden. Hierbei ist eine besonders bevorzugte Ausführungsform der Oxyfuel-Prozess. Einzelheiten des Oxyfuel-Prozesses werden z.B. in EP 2449328 A1, EP 1037005 B1, WO 2019-211196 A1, WO 2019-211202 A1 oder JP 2007-126328 A beschrieben, worauf Bezug genommen wird.

Durch den Einsatz von mit Sauerstoff angereicherter Prozessluft kann die SOz-Konzentration im Prozessgas erhöht werden, dies erleichtert die Gewinnung von Schwefelsäure aus SOz-haltigen Gasen.

Die oben erwähnte Prozessluft kann im Vorfeld zum Kühlen des gebrannten Materials genutzt worden sein. Ebenso ist es denkbar, dass diese Prozessluft dem Ofen direkt zugeführt wird. Vorstellbar wäre ebenfalls, dass das Prozessgas an einem Bypass-System und/oder aus dem Flugstromreaktor wenigstens teilweise abgezogen wird, anschließend mit Sauerstoff angereichert und dem Brennprozess wieder zugeführt wird.

Der aus dem Ofen kommende Klinker wird vorzugsweise durch ein geeignetes Kühlsystem auf eine Temperatur von unter 120°C, vorzugsweise unter 100°C, abgekühlt. Die Kühlerabluft kann wenigstens teilweise dem Brennprozess und/oder dem Vorwärmprozess und/oder der Rohmehlherstellung und/oder der Kalziumsulfat-Trocknung zugeführt werden. Die dem Kühlsystem zugeführte Prozessluft kann, zumindest teilweise, mit Sauerstoff angereichert sein. Vorstellbar wäre ebenfalls, dass wenigstens ein Teil der Kühlerabluft zur Stromerzeugung genutzt wird. Das durch den Kühlprozess abgekühlte Material wird nach möglichen weiteren Prozessschritten einer Lager- und/oder Verpackungseinrichtung zugeführt.

Der so produzierte Zementklinker kann weiter zu Zement verarbeitet werden. Der nach diesem Verfahren hergestellter Zementklinker bzw. Zement weisen einen geringeren COz-Fußabdruck auf als ein üblicher, auf Basis carbonathaltiger Gesteine hergestellter Klinker bzw. Zement.

Die oben erwähnten Prozesse, wie z.B. der Einsatz von Phosphorgips als CO₂-neutralen Rohmaterial und die Verwendung des Oxyfuel-Prozesses senken den CO2-Fußabdruck der Zementanlage. Weiterhin kann die Verwendung von wenigstens teilweise regenerativem Strom zum Betrieb der Anlageteile den CO2-Fußabdruck weiter absenken.

In Schritt e) des erfindungsgemäßen Verfahrens wird das in Schritt d) gebildete Schwefeldioxid einer Gasreinigung unterworfen.

Das zu reinigende Schwefeldioxid verlässt die Klinkerprozesseinheit vorzugsweise mit einer Temperatur von 200 °C bis 450 °C. Gegebenenfalls wird das zu reinigende Schwefeldioxid in einer Kühleinheit auf diese Temperatur vorgekühlt.

Das erfindungsgemäß Verfahren ist dadurch gekennzeichnet, dass die Reinigung des Schwefeldioxids in Schritt e) den Schritt
e1) einer Trockenabscheidung von Partikeln umfasst.

Erfindungsgemäß werden in diesem Schritt Partikel mit einer Größe von größer als 100 µm abgeschieden.

Die Reinigung des Schwefeldioxids in Schritt e) umfasst ferner die folgenden optionalen Schritte e2), e3) und e4).

Schritt e2) umfasst eine Nassabscheidung, erfindungsgemäß um Partikeln mit einer Größe von 20 bis 100 µm abzuscheiden.

Schritt e3) umfasst eine Abtrennung eine Trockenabschaltung, von Partikeln mit einer Größe kleiner als 20 µm.

Schritt e4) umfasst eine Abtrennung von Stickoxiden aus dem Schwefeldioxidgas.

Das erfindungsgemäße Verfahren ist vorzugsweise dadurch gekennzeichnet, dass die Trockenabscheidung von Partikeln aus dem Schwefeldioxid in den Schritten e1) und/oder e3) mittels eines Zyklons, Drehströmungsabscheiders und/oder Trocken-Elektrofilters vorgenommen wird.

Das erfindungsgemäße Verfahren ist vorzugsweise dadurch gekennzeichnet, dass die Nassabscheidung von Partikeln aus dem Schwefeldioxid in Schritt e2) mittels eines Venturi-Wäschers, Quenche/Kolonnenwäscher und/oder, Nass-Elektrofilters vorgenommen wird.

Das erfindungsgemäße Verfahren ist vorzugsweise dadurch gekennzeichnet, dass Restfeuchte, die nach der Nassabscheidung in dem Schwefeldioxid vorhanden sein kann durch Kondensation abgetrennt wird.

Das erfindungsgemäße Verfahren ist vorzugsweise dadurch gekennzeichnet, dass die Abtrennung von Stickoxiden aus dem Schwefeldioxid in Schritt e4) mittels Zersetzung der Stickoxide zu N₂ und H₂O erfolgt. Hierfür nutzbare Verfahren sind dem Fachmann bekannt und beispielsweise beschrieben in Handbook of Sulphuric Acid Manufacturing, by Douglas K. Louie, 2. Auflage 2008, herausgegeben durch DKL Engineering.

Die Zersetzung der Stickoxide erfolgt dabei vorzugsweise durch Gasbehandlungsverfahren wie selektive katalytische Reduktion, selektive nichtkatalytische Reduktion und/oder durch Wäschertechnologien, oder durch nasschemische Umsetzung in der flüssigen Phase im Schwefelsäureprozess.

Der Begriff selektive katalytische Reduktion (SCR) bezeichnet eine Technik zur Reduktion von Stickoxiden in Abgasen. Die chemische Reaktion am SCR-Katalysator ist selektiv, das heißt, dass bevorzugt die Stickoxide (NO, NO₂) reduziert werden, während unerwünschte Nebenreaktionen weitgehend unterdrückt werden.

Vorzugsweise wird für die Reaktion wird Ammoniak dem Abgas zugemischt. Die Produkte der Reaktion sind Wasser (H₂O) und Stickstoff (N₂). Bei der Reaktion handelt es sich um eine Komproportionierung der Stickoxide mit Ammoniak zu Stickstoff. Es können zwei Arten von Katalysatoren eingesetzt werden: Die erste besteht vorzugsweise hauptsächlich aus Titandioxid, Vanadiumpentoxid und Wolframdioxid, die andere verwendet vorzugsweise Zeolithe.

Das in Schritt e) gereinigte SO₂ wird in Schritt f) als Rohstoff einer Schwefelsäureproduktion zugeführt, um Schwefelsäure herzustellen, z.B. nach dem Single-Contact oder Double-Contact Verfahren. Die Schwefelsäureproduktion auf Basis von SO₂ ist dem Fachmann bestens bekannt. Einzelheiten hierzu können der Fachliteratur entnommen werden, z.B. Handbook of Sulphuric Acid Manufacturing, by Douglas K. Louie, 2. Auflage 2008, herausgegeben durch DKL Engineering, oder Ullmann's Encyclopedia of industrial chemistry, 5. Auflage, 1994, Bd. A25, "Sulfuric Acid and Sulfur Trioxide", S. 635-705.

Die in Schritt f) hergestellte Schwefelsäure kann z.B. in der Phosphorsäureproduktion als Einsatzmaterial für die Umsetzung mit dem Rohphosphat verwendet werden. Alternativ kann die produzierte Schwefelsäure je nach Bedarf einer weiteren bzw. anderen Nutzung zugeführt werden. Das behandelte Schwefeldioxid-Gas kann optional der in der Phosphorsäureproduktion existierenden oder einer neuen Schwefelsäureproduktionsanlage zugeführt werden.

In einer optionalen Variante des erfindungsgemäßen Verfahrens umfasst das Verfahren einen zusätzlichen Reinigungsschritt für das nach Schritt b) erhaltene Kalziumsulfat, der durchgeführt wird, bevor das Kalziumsulfat mit den Zusatzstoffen und Reduktionsmittel gemäß dem Schritt c) vermischt wird. Bei diesem zusätzlichen Reinigungsschritt können Metalle der Seltenen Erden aus dem Kalziumsulfat ausgewaschen werden, die gegebenenfalls als Verunreinigung enthalten sind.

Bei dem optionalen zusätzlichen Reinigungsschritt zur Entfernung von Seltenen Erden aus dem Kalziumsulfat vor Zuführung zu Schritt c) wird das in Schritt b) erhaltene gereinigte Kalziumsulfat vorzugsweise mit einer Flüssigkeit, vorzugsweise Wasser oder mit einer wässrigen Lösung, die Salz und/oder Chelatligand enthält, behandelt. Nach der Behandlung wird von der so erhaltenen Suspension das Kalziumsulfat als Feststoff von der flüssigen Phase abgetrennt. Das so weiter gereinigte und abgetrennte Kalziumsulfat wird dann dem Schritt c) zugeführt. Die flüssige Phase enthält eine oder mehrere Seltene Erden als gelöste Ionen und kann zur Gewinnung der Seltenen Erden einer weiteren Aufbereitung zugeführt werden. Beispielsweise umfasst diese Aufbereitung die Überführung schwerlöslicher Selten Erd-Sulfate in lösliche Formen.

Das erfindungsgemäße Verfahren kann ferner dazu dienen, radioaktive Elemente und/oder Schwermetalle zu entfernen. Das erhaltene gereinigte Kalziumsulfat nach Schritt b) zeigt bei geeigneter Einstellung der Reaktionsbedingungen (S/L-Verhältnis, Verweilzeit, Konzentration der Säure und Temperatur) eine deutliche Abreicherung an radioaktiven Elementen, wie z.B. Thorium und Uran. Bei dem weiteren optionalen Reinigungsschritt zur Gewinnung von Seltenen Erden können des Weiteren Schwermetalle (und weitere radioaktive Bestandteile), wie z.B. Cadmium und Blei durch geeignete Wahl des Aufbereitungsschritts entfernt werden. Das gereinigte Kalziumsulfat kann vor der Zuführung zu Schritt c) daher einen reduzierten Gehalt an Phosphor und Fluor und gegebenenfalls an Seltenen Erden, radioaktiven Elementen und/oder Schwermetallen aufweisen. Es versteht sich, dass der reduzierte Gehalt des jeweiligen Elements sich auf den Vergleich zum Gehalt des jeweiligen Elements in dem Kalziumsulfat bezieht, das dem Schritt a) zugeführt wird.

Der integrative Ansatz bzw. das integrative Verfahren der Erfindung ist insbesondere gekennzeichnet durch die folgenden Merkmale bzw. Vorteile:
- Der Prozess zur Herstellung von Zementklinker bzw. Zement kann hinsichtlich der Ausgangsqualität des Phosphorgipses flexibel und in Kombination mit dem Phosphorsäureprozess geführt werden,
- Die aus dem SO₂-Abgas hergestellte Schwefelsäure kann in den Gesamtkomplex eingebracht und verbraucht sowie erzeugt und beispielsweise im Kreis geführt werden
- Folgende verfahrenstechnische Operationen können beispielsweise in ihrer Gesamtheit oder optional für die Herstellung von Zementklinker/Zement und Schwefelsäure aus Kalziumsulfat kombiniert werden:
   ∘ Chemische und thermische Modifikation des Phosphorsäureprozesses zur zielgerichteten Produktion einer für den Zementklinkerprozess geeigneten Phosphorgipsqualität
   ∘ Mechanische Abtrennung des Phosphorgips aus dem laufenden Phosphorsäureprozess, zum Beispiel durch Zentrifugieren, Filtrieren, Verdampfen oder Absetzen/Sedimentieren des Kalziumsulfat-/Phosphorgips-Schlamms
   ∘ Chemisch-thermische und mechanische Abtrennung von Phosphor aus dem Phosphorgips, zum Beispiel durch chemische Umwandlung, Rekristallisation, Fällung, Flockung,
   ∘ Chemisch-thermische und mechanische Abtrennung von Fluor aus dem Phosphorgips, zum Beispiel durch chemische Umwandlung, Rekristallisation, Fällung, Flockung,
   ∘ Chemisch-thermische und mechanische Abtrennung von radioaktiven Komponenten aus dem Phosphorgips, zum Beispiel durch chemische Umwandlung unter Heizen/Kühlen, Rekristallisation, Fällung, Flockung,
   ∘ Chemisch-thermische und mechanische Abtrennung von Schwermetallen aus dem Phosphorgips, zum Beispiel durch chemische Umwandlung unter Heizen/Kühlen, Rekristallisation, Fällung, Flockung,
   ∘ Chemisch-thermische und mechanische Abtrennung von Seltenen Erden aus dem Phosphorgips, zum Beispiel durch chemische Umwandlung unter Heizen/Kühlen, Rekristallisation, Fällung, Flockung,
   ∘ Chemische und/oder thermische und/oder mechanische Entwässerung des Phosphorgips, zum Beispiel durch Heizen/Kühlen, Flockung und Fällung, Filtration
   ∘ Mechanische Behandlung des trockenen Phosphorgips, zum Beispiel durch Zerkleinern, Sichtung,
   ∘ Mischen des Phosphorgips mit Additiven zu einer Rohmehlmischung zur Erzielung von spezifischen und handelsüblichen Zementklinker-/Zementqualitäten
   ∘ Thermische und mechanische Trennung des Schwefeldioxids aus der Rohmehlmischung im Rahmen des Brennprozesses bei der Zementklinkerproduktion
   ∘ Thermische und chemische Umwandlung der Rohmehlmischung in Zementklinker
   ∘ Chemische und mechanische Umwandlung des Zementklinkers in handelsübliche Zementqualität
   ∘ Trocken- und nasschemische Reinigung des abgetrennten Schwefeldioxid-haltigen Abgases, zum Beispiel durch Elektrofiltration, Absorption
   ∘ Chemisch und thermische Modifikation des Schwefelsäureprozesses zur Einbindung und Verwendung des generierten Schwefeldioxids in Anlagen zur Erzeugung von Schwefelsäure
   ∘ Chemische Umwandlung des gereinigten Schwefeldioxid-haltigen Abgases in Schwefelsäure handelsüblicher und im Phosphorsäureprozess wiederverwendbarer Qualität, zum Beispiel nach dem Single-Contact oder Double-Contact Verfahren.

Je nach vorliegender Qualität des eingesetzten Kalziumsulfats müssen die Herstellungsverfahren in der Wahl der verfahrenstechnischen Operationen und Parameter flexibel gewählt und aufeinander abgestimmt werden. Die aus dem Phosphorsäureprozess erzielte Qualität des Kalziumsulfats ist abhängig von Faktoren wie eingesetztes Rohphosphat und Prozessbedingungen bei dem Aufschluss des Rohphosphats mit Schwefelsäure.

Der Umfang der Reinigung, insbesondere hinsichtlich der Reduzierung des Gehalts an Phosphor und/oder Fluor, des Kalziumsulfats in Schritt a) kann unter Berücksichtigung der Verunreinigungen, die in den eingesetzten Zusatzstoffen enthalten sind, und der für den Zementklinker einzuhaltenden Richtwerten an Phosphor und Fluor, eingestellt werden. Die Richtwerte für Phosphor sind bevorzugt maximal 1,0 Gew.-%, bevorzugter maximal 0,5 Gew.-%, noch bevorzugter maximal 0,1 Gew.-% P₂O₅ und/oder die Richtwerte für Fluor sind bevorzugt maximal 0,5 Gew.-%, bevorzugter maximal 0,25 Gew.-%, noch bevorzugter maximal 0,1 Gew.-%F. Dies ist aufgrund des integrativen Ansatzes möglich, da alle Prozessschritte gemeinsam unter Berücksichtigung ihrer jeweiligen Anforderungen betrachtet werden. Die Einstellung des Reinigungsumfangs kann durch die Anpassung der Parameter in Schritt a), wie z.B. S/L-Verhältnis, Konzentration der Säure, Behandlungstemperatur und -dauer, erfolgen.

Der Flüssigkeitshaushalt, insbesondere der Wasserhaushalt, der Phosphorsäureproduktion wird durch das integrierte Verfahren nicht oder nur unwesentlich geändert, insbesondere da der Flüssigkeitseinsatz, insbesondere Wassereinsatz, zur Reinigung des Kalziumsulfats im Verfahren gemäß Schritt a) an den Flüssigkeitshaushalt, insbesondere Wasserhaushalt, der Phosphorsäureproduktion gekoppelt werden kann. Der Flüssigkeitshaushalt bzw. Wasserhaushalt der Phosphorsäureproduktion umfasst die Flüssigkeit bzw. das Wasser, die bzw. das der Produktion zugeführt wird, und die Flüssigkeit bzw. das Wasser, die bzw. das aus der Produktion ausgeschleust wird. Änderungen im Flüssigkeitshaushalt, insbesondere Wasserhaushalt, haben einen signifikanten Einfluss auf die Effizienz der Prozessschritte in der Phosphorsäureproduktion.

Eine beispielshafte Anlage zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, dient zur Durchführung des erfindungsgemäßen Verfahrens. Die Anlage umfasst folgende Einrichtungen:
a) eine Kalziumsulfat-Reaktionseinheit, die geeignet ist, um darin das von der Phosphorsäure abgetrennte Kalziumsulfat mit einer Säure zu behandeln, um eine Suspension mit gereinigtem Kalziumsulfat zu erhalten,
b) eine Kalziumsulfat-Trenneinheit, die geeignet ist, um das gereinigte Kalziumsulfat als Feststoff von der flüssigen Phase der erhaltenen Suspension abzutrennen,
c) eine Rohmehl-Mischeinheit, die geeignet ist, um darin das abgetrennte gereinigte Kalziumsulfat mit Zusatzstoffen und Reduktionsmittel zu vermischen, um eine Rohmehlmischung für die Zementklinkerproduktion zu erhalten,
d) eine Zementklinker-Produktionseinheit, insbesondere eine Kombination von einem Vorwärmer, wenigstens einer Brenneinrichtung und einem Kühler, die geeignet sind, die Rohmehlmischung vorzuwärmen, zu brennen und zu kühlen, um den Zementklinker zu erhalten, wobei Schwefeldioxid als Abgas gebildet wird,
e) eine Schwefeldioxid-Abgas-Reinigungsanlage, die geeignet ist Verunreinigungen aus dem Schwefeldioxid-Abgas zu entfernen und/oder
f) eine Schwefelsäure-Produktionsanlage, zu der das in der Zementklinker-Produktionseinheit gebildete und gegebenenfalls gereinigte Schwefeldioxid-Abgas als Rohstoff zugeführt wird, um Schwefelsäure herzustellen, wobei die Schwefelsäure-Produktionsanlage ein Teil der Phosphorsäureproduktionsanlage oder eine externe Schwefelsäure-Produktionsanlage sein kann.

Die Schwefelsäureproduktionsanlage in Schritt f) arbeitet vorzugsweise nach dem Single-Contact oder Double-Contact Verfahren. Die Schwefelsäureproduktion auf Basis von SO₂ ist dem Fachmann bestens bekannt. Einzelheiten hierzu können der Fachliteratur entnommen werden, z.B. Handbook of Sulphuric Acid Manufacturing, by Douglas K. Louie, 2. Auflage, 2014, oder Ullmann's Encyclopedia of industrial chemistry, 5. Auflage, 1994, Bd. A25, "Sulfuric Acid and Sulfur Trioxide", S. 635-705.

Die Anlage kann für das vorstehend beschriebene erfindungsgemäße Verfahren verwendet werden. Für Angaben zu den einzelnen Einrichtungen bzw. Einheiten wird auf die vorstehenden Angaben hierzu verwiesen. Die vorstehenden Angaben für das Verfahren gelten entsprechend für die Anlage.

Es ist bevorzugt, dass bei der erfindungsgemäßen Anlage die Kalziumsulfat-Trenneinheit fluidisch, beispielsweise über eine Rohrleitung, mit der Phosphorsäureproduktionsanlage verbunden ist, damit die in der Kalziumsulfat-Trenneinheit erhaltene flüssige Phase als Einsatzstoff in die Phosphorsäureproduktion eingebracht werden kann.

Es ist bevorzugt, dass bei der erfindungsgemäßen Anlage das abgetrennte Kalziumsulfat für Schritt a) von einer Trenneinheit der Phosphorsäureproduktion, die die Phosphorsäure von dem Kalziumsulfat trennt, oder von einer Halde von Kalziumsulfat aus der Phosphorsäureproduktion zugeführt werden kann.

Nachfolgend wird die Erfindung anhand von Ausführungsbeispielen beschrieben, die anhand der Figuren näher erläutert werden. Die Ausführungsbeispiele sollen den Umfang der beanspruchten Erfindung in keiner Weise beschränken.
Fig. 1 zeigt ein schematisches Fließbild zur Verwertung von Kalziumsulfat aus der Phosphorsäureproduktion mithilfe eines integrierten Komplexes zur Herstellung von Zementklinker und Schwefelsäure.
Fig. 2 zeigt ein schematisches Fließbild zur Verwertung von Kalziumsulfat aus der Phosphorsäureproduktion mithilfe eines integrierten Komplexes zur Herstellung von Zementklinker und Schwefelsäure wie in Fig. 1, wobei zusätzlich alternative oder zusätzliche Prozessschritte gezeigt sind.
Fig. 3 zeigt ein schematisches Fließbild zur Aufreinigung des SO₂ Gases, das bei der Herstellung von Zementklinker gewonnen wird.

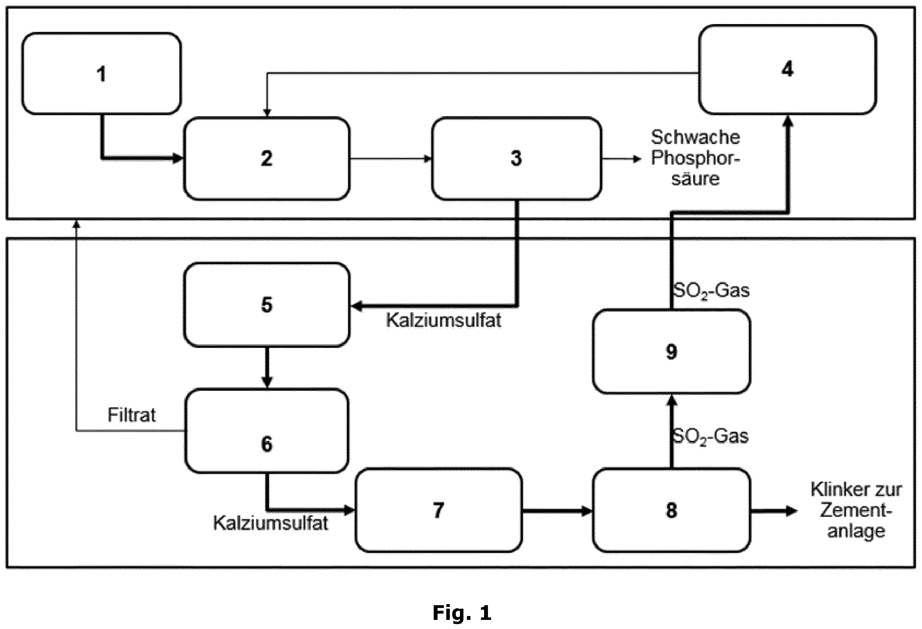

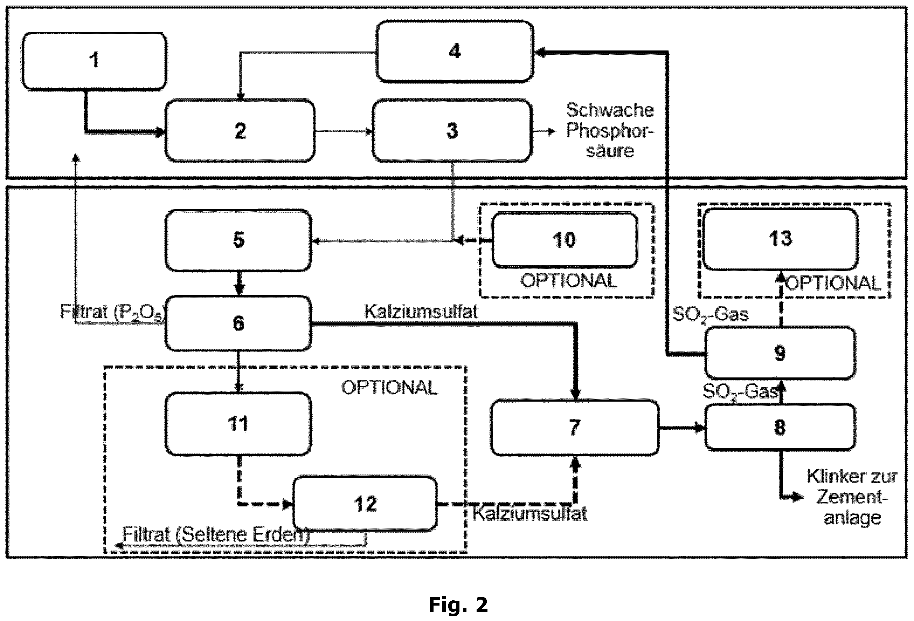

Fig. 1 zeigt ein Fließbild einer Phosphorsäureproduktion (existierender Komplex) und ein integriertes Verfahren zur Herstellung von Zementklinker und Schwefelsäure aus Kalziumsulfat, der von der Phosphorsäureproduktion stammt (integrierter Komplex). In einer Aufbereitungseinheit 1 wird das Phosphatgestein aufbereitet, um den Rohphosphat zu erhalten. Das Rohphosphat wird in der Reaktionseinheit der Phosphorsäureanlage 2 mit aus der Schwefelsäureproduktionsanlage stammender Schwefelsäure umgesetzt, um Phosphorsäure und festes Kalziumsulfat als Nebenprodukt zu bilden. Das in der Phosphorsäureproduktion generierte Kalziumsulfat wird in der Filtrationseinheit 3 der Phosphorsäureanlage von der Phosphorsäure abgetrennt und der Kalziumsulfat-Reaktionseinheit 5 zugeführt. Dort wird das Kalziumsulfat mit Säure behandelt, so dass nach der Behandlung z.B. eine 1-12 molare Säure, insbesondere eine 1-12 molare Schwefelsäure, erhalten wird. Beispielsweise kann eine 1-12 molare Schwefelsäure zur Behandlung zugesetzt werden. Die Behandlung kann nach Zugabe der Säure z.B. bei einer Temperatur von 15-100°C für 5 bis 120 min durchgeführt werden, wobei die erhaltene Suspension vorzugsweise bewegt wird, z.B. durch Rühren. Dabei werden die Verunreinigungen im Kalziumsulfat, die den nachgeschalteten Zementklinkerprozess und die Zementqualität negativ beeinflussen, auf den vom Zementklinkerprozess geforderten Gehalt reduziert. In einer Kalziumsulfat-Trenneinheit 6, die bevorzugt eine Filtrationseinheit ist, werden die Flüssigkeit und der resultierende Feststoff voneinander getrennt. Die Flüssigkeit, insbesondere das Filtrat, kann in dem existierenden Phosphorsäure-Schwefelsäure-Komplex verwendet werden. Das behandelte Kalziumsulfat wird der für den Zementklinkerprozess vorgeschalteten Rohmehl-Zubereitungseinheit 7 zugeführt. Dort wird das Kalziumsulfat mit den erforderlichen Zusatzstoffen für die geforderte Zementklinkerqualität im richtigen Verhältnis vermischt. Mit dem vorbereiteten Zementklinkerrohmehl wird die Zementklinker-Prozesseinheit 8 beschickt, wobei das Rohmehl vor der Zuführung zur Prozesseinheit 8 vorzugsweise in einem Wärmetauscher vorgewärmt wird (nicht gezeigt). In der Zementklinker-Prozesseinheit 8 wird Schwefeldioxid aus dem Kalziumsulfat getrennt und als Abgas aus der Zementklinker-Prozesseinheit der Schwefeldioxid-Abgasbehandlung 9 zugeführt. Das behandelte Schwefeldioxid-Gas kann optional der existierenden Schwefelsäureproduktionsanlage 4 zugeführt werden. Alternativ kann das behandelte Schwefeldioxid-Gas optional einer neuen Schwefelsäureproduktionsanlage (vgl. 13 in Fig. 2) zugeführt werden. Das in der Zementklinkerprozess-Einheit verbleibende Kalzium wird mit den Zusatzstoffen zu Zementklinker reagiert. Die Brenntemperatur zur Zementklinkerherstellung kann z.B. bei einer Temperatur im Bereich von 1200°C bis 1600 °C und einer Brenndauer von 5 Minuten bis 60 Minuten liegen. Der so produzierte Zementklinker wird gekühlt und kann weiter zu Zement verarbeitet werden.

Fig. 2 zeigt ein schematisches Fließbild zur Verwertung von Kalziumsulfat aus der Phosphorsäureproduktion mithilfe eines integrierten Komplexes zur Herstellung von Zementklinker und Schwefelsäure gemäß Fig. 1, wobei zusätzlich alternative oder zusätzliche Prozessschritte gezeigt sind. Im Folgenden wird auf die alternativen oder zusätzlichen Prozessschritte eingegangen, ansonsten wird auf die Erläuterungen zu Fig. 1 verwiesen. Fig. 2 zeigt eine alternative Quelle für das in Schritt a) eingesetzte Kalziumsulfat. Anstelle des Kalziumsulfats aus der Filtrationseinheit der Phosphorsäureanlage 3 kann für das in Schritt a) eingesetzte Kalziumsulfat ein Kalziumsulfat von einer Halde 10 eingesetzt werden, bei dem es sich um deponiertes Kalziumsulfat aus einer Phosphorsäureproduktion handelt. Des Weiteren ist in Fig. 2 der optionale Aufbereitungsschritt zur Entfernung von Seltenen Erden gezeigt, der eine Reaktionseinheit zur Gewinnung Seltener Erdmetalle aus dem Kalziumsulfat 11 und die Kalziumsulfat-Trenneinheit 12 zur Abtrennung der flüssigen Phase von dem gereinigten Kalziumsulfat umfasst. Ferner ist in Fig. 2 gezeigt, dass das aus der SO₂-Behandlung 9 erhaltene Schwefeldioxid für die Gewinnung von Schwefelsäure in der existierenden Schwefelsäureproduktionsanlage 4 und/oder einer neuen Schwefelsäureproduktionsanlage 13 eingesetzt werden kann.

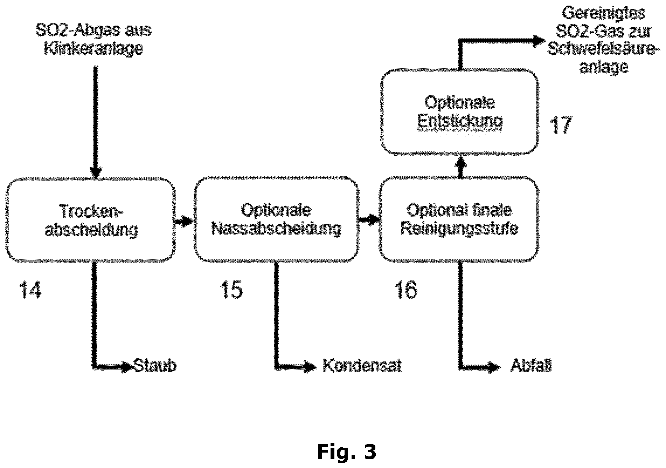

Fig. 3 zeigt ein schematisches Fließbild zur Aufreinigung des SO₂ Gases in der Schwefeldioxid-Abgasbehandlungsanlage 9. Das SO₂ Abgas aus der Klinkeranlage wird dazu zunächst einer Trockenabscheidung 14 zugeführt, vorzugsweise um Partikel mit einer Größe von größer als 100 µm, abzuscheiden. Ferner kann die Gasaufbereitung eine nachgeschaltete optionale Nassabscheidung 15, vorzugsweise um Partikeln mit einer Größe von 20 bis 100 µm abzuscheiden, und eine optionale Abtrennung von Partikeln 16 vorzugsweise mit einer Größe kleiner als 20 µm aufweisen. Nach den Partikelabscheidungsanlagen 14, 15, 16 ist vorzugsweise eine Anlage zur Abtrennung von Stickoxiden 17 geschaltet.

### Bezugszeichenliste

- 1: Aufbereitungseinheit Phosphatgestein bzw. Phosphaterz
- 2: Reaktionseinheit der Phosphorsäureanlage
- 3: Filtrationseinheit der Phosphorsäureanlage
- 4: Schwefelsäureproduktionsanlage (existierend)
- 5: Kalziumsulfat-Reaktionseinheit
- 6: Kalziumsulfat-Trenneinheit
- 7: Rohmehl-Zubereitungseinheit
- 8: Zementklinker-Prozesseinheit
- 9: Schwefeldioxid-Abgasbehandlung
- 10: Kalziumsulfat von Halde (aus Phosphorsäureproduktion)
- 11: Gewinnung Seltene Erden aus Kalziumsulfat
- 12: Kalziumsulfat-Trenneinheit
- 13: Schwefelsäureproduktionsanlage (neu)
- 14: Trockenabscheidung
- 15: optionale Nassabscheidung
- 16: optionale finale Reinigungsstufe
- 17: optionale Entfernung von Stickoxiden

## Patentansprüche

1. Verfahren zur Herstellung von Schwefelsäure und Zementklinker unter Verwendung von Kalziumsulfat, das in einer Phosphorsäureproduktion bei der Umsetzung von Rohphosphat mit Schwefelsäure zur Bildung von Phosphorsäure als festes Nebenprodukt gebildet und abgetrennt wird, wobei das Verfahren folgende Schritte umfasst:
a) das von der Phosphorsäure abgetrennte Kalziumsulfat wird mit einer Säure behandelt, um eine Suspension mit gereinigtem Kalziumsulfat zu erhalten,
b) das gereinigte Kalziumsulfat wird als Feststoff von der flüssigen Phase der erhaltenen Suspension abgetrennt,
c) das abgetrennte gereinigte Kalziumsulfat wird mit Zusatzstoffen und Reduktionsmittel vermischt, um eine Rohmehlmischung für die Zementklinkerproduktion zu erhalten,
d) die Rohmehlmischung wird gebrannt, um den Zementklinker zu erhalten, wobei Schwefeldioxid als Abgas gebildet wird,
e) das gebildete Schwefeldioxid einer Abgasreinigung unterworfen wird und
f) als Rohstoff einer Schwefelsäureproduktion zugeführt, um die Schwefelsäure herzustellen, wobei die hergestellte Schwefelsäure als Einsatzmaterial in der Phosphorsäureproduktion verwendet und/oder einer anderen Nutzung zugeführt werden kann,
**dadurch gekennzeichnet, dass**
die Reinigung des Schwefeldioxids in Schritt e) folgende Schritte umfasst:
e1) Trockenabscheidung von Partikeln mit einer Größe von größer als 100 µm,
e2) Nassabscheidung von Partikeln mit einer Größe von 20 bis 100 µm,
e3) Abtrennung von Partikeln mit einer Größe kleiner als 20 µm und
e4) Abtrennung von Stickoxiden,
wobei das in Schritt b) erhaltene abgetrennte gereinigte Kalziumsulfat mindestens 50 Gew.-% Anhydrit bezogen auf trockenes Kalziumsulfat enthält.

2. Verfahren nach Anspruch 1, **dadurch gekennzeichnet, dass** das Verfahren ein integriertes Verfahren ist.

3. Verfahren nach Anspruch 1 oder 2, **dadurch gekennzeichnet, dass** die Phosphorsäureproduktion nach einem Prozess ausgeführt wird, der ausgewählt ist aus einem Dihydrat-(DH)-Prozess, Hemihydrat-(HH)-Prozess, Dihydrat-Hemihydrat-(DHH)-Prozess, Hemihydrat-Dihydrat-(HDH)-Prozess und Dihydrat-Attack-Hemihydrat-Filtration-(DA-HF)-Prozess, vorzugsweise aus einem Dihydrat-(DH)-Prozess und einem Hemihydrat-(HH)-Prozess.

4. Verfahren nach einem der vorhergehenden Ansprüche, **dadurch gekennzeichnet, dass** als Kalziumsulfat, das in Schritt a) eingesetzt wird, das aus einer Trenneinheit der Phosphorsäureproduktion erhaltene Kalziumsulfat verwendet wird, wobei bevorzugt der nach der ersten Trennung von der Phosphorsäure erhaltene Kalziumsulfat-Feststoff, bevorzugt Kalziumsulfat-Filterkuchen, aus der Phosphorsäureproduktion direkt oder nach einer oder mehreren Wäschen mit Flüssigkeit, bevorzugt Wasser, verwendet wird, und/oder
auf Halden gelagertes Kalziumsulfat aus der Phosphorsäureproduktion verwendet wird.

5. Verfahren nach einem der vorhergehenden Ansprüche, **dadurch gekennzeichnet, dass**
in Schritt a) die Säure in einer solchen Menge zugegeben wird, dass das Gewichtsverhältnis von Feststoff zu Flüssigkeit (S/L-Verhältnis) in der Suspension im Bereich von 1/10 bis 1/1, bevorzugt 1/5 bis 1/1, liegt, und/oder
die aus der Behandlung nach Schritt a) resultierende Säure eine 1 bis 12 molare, bevorzugt 3 bis 10 molare, bevorzugter 5 bis 8 molare, Säure ist, und/oder
wobei die Säure ausgewählt ist aus Salzsäure, Salpetersäure, schweflige Säure und/oder Schwefelsäure, und/oder
wobei die Behandlung in Schritt a) bei einer Temperatur im Bereich von 15 bis 100 °C, bevorzugt 30 bis 80 °C, bevorzugter 45 bis 75 °C, durchgeführt wird, und/oder
wobei die Dauer der Behandlung in Schritt a) im Bereich von 5 bis 120 Minuten, bevorzugt 15 bis 90 Minuten, bevorzugter 20 bis 60 Minuten, liegt.

6. Verfahren nach einem der vorhergehenden Ansprüche, **dadurch gekennzeichnet, dass** der Dᵥ(50)-Wert der Korngrößenverteilung des in Schritt b) erhaltenen Kalziumsulfats, insbesondere Kalziumsulfat-Anhydrits, im Bereich von 0,5 - 100µm , bevorzugt 1- 50µm, insbesondere 2-30µm, liegt.

7. Verfahren nach einem der vorhergehenden Ansprüche, **dadurch gekennzeichnet, dass** die in Schritt b) erhaltene flüssige Phase als Einsatzstoff in der Phosphorsäureproduktion verwendet wird, insbesondere als Teilmenge der erforderlichen Schwefelsäure zum Aufschluss des Rohphosphats.

8. Verfahren nach einem der vorhergehenden Ansprüche, **dadurch gekennzeichnet, dass** die Zusatzstoffe zur Herstellung der Rohmehlmischung in Schritt c) Rohstoffe oder Verbindungen sind, die ein oder mehrere Oxide ausgewählt aus Oxiden von Si, Al, Fe und gegebenenfalls Ca oder Vorstufen davon umfassen,
und/oder als Reduktionsmittel Kohlenstoff und/oder Kohlenwasserstoffe dem Kalziumsulfat zugemischt wird, und/oder
der in Schritt d) erzeugte Zementklinker zur Zementherstellung verwendet wird.

9. Verfahren nach einem der vorhergehenden Ansprüche, **dadurch gekennzeichnet, dass** die Trockenabscheidung von Partikeln aus dem Schwefeldioxid in den Schritten e1) und/oder e3) mittels eines Zyklons, Absetzabscheiders, Drehströmungsabscheiders und/oder Elektrofilters vorgenommen wird.

10. Verfahren gemäß Anspruch 9, **dadurch gekennzeichnet, dass** die von Partikeln aus dem Schwefeldioxid in Schritt e2) mittels eines Venturi-Wäschers, Rotationswäschers und/oder, Strahlwäschers vorgenommen wird und wobei vorzugsweise Restfeuchte im Schwefeldioxid durch Kondensation und/oder Nass-Elektrofilter abgetrennt wird.

11. Verfahren nach einem der vorhergehenden Ansprüche, **dadurch gekennzeichnet, dass** die Abtrennung von Stickoxiden aus dem Schwefeldioxid in Schritt e4) mittels Zersetzung der Stickoxide zu N₂ und H₂O erfolgt.

12. Verfahren nach einem der vorhergehenden Ansprüche, **dadurch gekennzeichnet, dass** das in Schritt b) erhaltene gereinigte Kalziumsulfat vor der Zuführung zu Schritt c) einem zusätzlichen Reinigungsschritt zur Entfernung von Seltenen Erden unterworfen wird, bei dem das in Schritt b) erhaltene gereinigte Kalziumsulfat mit einer Flüssigkeit, bevorzugt mit Wasser oder mit einer Salz und/oder Chelatligand enthaltenden wässrigen Lösung, behandelt wird und von der so erhaltenen Suspension das weiter gereinigte Kalziumsulfat als Feststoff von der flüssigen Phase abgetrennt wird, wobei das weiter gereinigte Kalziumsulfat dem Schritt c) zugeführt wird und in der flüssigen Phase eine oder mehrere Seltene Erden enthalten sind.

13. Verfahren nach einem der vorhergehenden Ansprüche, **dadurch gekennzeichnet, dass** der Umfang der Reinigung des Kalziumsulfats in Schritt a) unter Berücksichtigung der Verunreinigungen, die in den eingesetzten Zusatzstoffen für das Rohmehl enthalten sind, und die für den Zementklinker einzuhaltenden Richtwerte an Phosphor und Fluor, die bevorzugt maximal 1,0 Gew.-%, bevorzugter maximal 0,5 Gew.-%, noch bevorzugter maximal 0,1 Gew.-% P₂O₅ und/oder bevorzugt maximal 0,5 Gew.-%, bevorzugter maximal 0,25 Gew.-%, noch bevorzugter maximal 0,1 Gew.-% F sind, eingestellt wird, und/oder
der Flüssigkeitshaushalt, bevorzugt der Wasserhaushalt, der Phosphorsäureproduktion durch das integrierte Verfahren nicht oder nur unwesentlich geändert wird, insbesondere da der Flüssigkeitseinsatz, bevorzugt der Wassereinsatz, zur Reinigung des Kalziumsulfats im integrierten Verfahren an den Flüssigkeitshaushalt, bevorzugt den Wasserhaushalt, der Phosphorsäureproduktion gekoppelt ist.

## Claims

1. A process for producing sulfuric acid and cement clinker using calcium sulfate which is formed as a solid by-product and separated off in phosphoric acid production in the reaction of raw phosphate with sulfuric acid to form phosphoric acid, wherein the process comprises the following steps:
a) the calcium sulfate separated from the phosphoric acid is treated with an acid in order to obtain a suspension comprising purified calcium sulfate,
b) the purified calcium sulfate is separated in solid form from the liquid phase of the suspension obtained,
c) the purified calcium sulfate separated off is mixed with admixtures and reducing agents in order to obtain a raw meal mixture for cement clinker production,
d) the raw meal mixture is burnt in order to obtain the cement clinker, with formation of sulfur dioxide as offgas,
e) the sulfur dioxide formed is subjected to offgas purification and
f) fed as raw material to sulfuric acid production in order to produce the sulfuric acid, it being possible to use the sulfuric acid produced as starting material in phosphoric acid production and/or send it to another use,
**characterized in that**
the purification of the sulfur dioxide in step e) comprises the following steps:
e1) dry deposition of particles having a size of greater than 100 µm,
e2) wet deposition of particles having a size of 20 to 100 µm,
e3) removal of particles having a size of less than 20 µm, and
e4) removal of nitrogen oxides,
wherein the purified calcium sulfate separated off which is obtained in step b) contains at least 50% by weight of anhydrite, based on dry calcium sulfate.

2. The process as claimed in claim 1, **characterized in that** the process is an integrated process.

3. The process as claimed in claim 1 or 2, **characterized in that** the phosphoric acid production is executed by a process selected from a dihydrate (DH) process, hemihydrate (HH) process, dihydrate-hemihydrate (DHH) process, hemihydrate-dihydrate (HDH) process and dihydrate attack-hemihydrate filtration (DA-HF) process, preferably from a dihydrate (DH) process and a hemihydrate (HH) process.

4. The process as claimed in any of the preceding claims, **characterized in that** the calcium sulfate used in step a) is
the calcium sulfate obtained from a separation unit in phosphoric acid production, preferably with use of the calcium sulfate solid obtained after the first separation from the phosphoric acid, preferably calcium sulfate filtercake, from phosphoric acid production directly or after one or more washes with liquid, preferably water, and/or
stockpiled calcium sulfate from phosphoric acid production is used.

5. The process as claimed in any of the preceding claims, **characterized in that** in step a) the acid is added in such an amount that the weight ratio of solids to liquid (S/L ratio) in the suspension is in the range from 1/10 to 1/1, preferably 1/5 to 1/1, and/or
the acid resulting from the treatment after step a) is a 1 to 12 molar, preferably 3 to 10 molar, more preferably 5 to 8 molar, acid, and/or wherein the acid is selected from hydrochloric acid, nitric acid, sulfurous acid and/or sulfuric acid, and/or
wherein the treatment in step a) is conducted at a temperature in the range from 15 to 100°C, preferably 30 to 80°C, more preferably 45 to 75°C, and/or
wherein the duration of the treatment in step a) is in the range from 5 to 120 minutes, preferably 15 to 90 minutes, more preferably 20 to 60 minutes.

6. The process as claimed in any of the preceding claims, **characterized in that** the Dᵥ(50) of the grain size distribution of the calcium sulfate obtained in step b), especially calcium sulfate anhydrite, is in the range of 0.5-100 µm, preferably 1-50 µm, especially 2-30 µm.

7. The process as claimed in any of the preceding claims, **characterized in that** the liquid phase obtained in step b) is used as feedstock in phosphoric acid production, especially as a portion of the sulfuric acid required to digest the raw phosphate.

8. The process as claimed in any of the preceding claims, **characterized in that** the admixtures for production of the raw meal mixture in step c) are raw materials or compounds comprising one or more oxides selected from oxides of Si, Al, Fe and optionally Ca or precursors thereof,
and/or carbon and/or hydrocarbons are mixed into the calcium sulfate as reducing agents, and/or
the cement clinker produced in step d) is used for cement production.

9. The process as claimed in any of the preceding claims, **characterized in that** the dry deposition of particles from the sulfur dioxide in steps e1) and/or e3) is undertaken by means of a cyclone, settling separator, rotational flow separator and/or electrofilter.

10. The process as claimed in claim 9, **characterized in that** the of particles from the sulfur dioxide in step e2) is undertaken by means of a Venturi scrubber, rotary scrubber and/or jet scrubber, and wherein residual moisture in the sulfur dioxide is preferably removed by condensation and/or a wet electrofilter.

11. The process as claimed in any of the preceding claims, **characterized in that** nitrogen oxides are separated from the sulfur dioxide in step e4) by means of breakdown of the nitrogen oxides to N₂ and H₂O.

12. The process as claimed in any of the preceding claims, **characterized in that** the purified calcium sulfate obtained in step b), before being fed to step c), is subjected to an additional purification step for removal of rare earths, in which the purified calcium sulfate obtained in step b) is treated with a liquid, preferably with water or with a salt- and/or chelate ligand-containing aqueous solution, and the further-purified calcium sulfate is separated in solid form from the liquid phase in the suspension thus obtained, wherein the further-purified calcium sulfate is sent to step c), and one or more rare earths are present in the liquid phase.

13. The process as claimed in any of the preceding claims, **characterized in that** the extent of purification of the calcium sulfate in step a) is established taking account of the impurities present in the admixtures used for the raw meal, and the guide values for phosphorus and fluorine that are to be observed for the cement clinker, which are preferably not more than 1.0% by weight, more preferably not more than 0.5% by weight, even more preferably not more than 0.1% by weight, of P₂O₅ and/or preferably not more than 0.5% by weight, more preferably not more than 0.25% by weight, even more preferably not more than 0.1% by weight, of F, and/or the liquid budget, preferably the water budget, of the phosphoric acid production is altered only insignificantly, if at all, by the integrated process, especially since the input of liquid, preferably the input of water, for purification of the calcium sulfate in the integrated process is coupled to the liquid budget, preferably the water budget, of the phosphoric acid production.

## Revendications

1. Procédé de production d'acide sulfurique et de clinker de ciment utilisant le sulfate de calcium qui est formé en tant que sous-produit solide et séparé lors de la production d'acide phosphorique dans la réaction du phosphate brut avec l'acide sulfurique pour former de l'acide phosphorique, dans lequel le procédé comprend les étapes suivantes :
a) le sulfate de calcium séparé de l'acide phosphorique est traité avec un acide afin d'obtenir une suspension comprenant du sulfate de calcium purifié,
b) le sulfate de calcium purifié est séparé sous forme solide de la phase liquide de la suspension obtenue,
c) le sulfate de calcium purifié séparé est mélangé avec des adjuvants et des agents réducteurs afin d'obtenir un mélange de farine crue pour la production de clinker,
d) le mélange de farine crue est brûlé afin d'obtenir le clinker, avec formation de dioxyde de soufre comme gaz d'échappement,
e) le dioxyde de soufre formé est soumis à une épuration des effluents gazeux et
f) alimenté en tant que matière première pour la production d'acide sulfurique afin de produire de l'acide sulfurique, l'acide sulfurique produit pouvant être utilisé comme matière première pour la production d'acide phosphorique et/ou être utilisé à d'autres fins,
**caractérisé par le fait que**
la purification du dioxyde de soufre à l'étape e) comprend les étapes suivantes :
e1) dépôt à sec de particules d'une taille supérieure à 100 µm,
e2) dépôt humide de particules d'une taille comprise entre 20 et 100 µm,
e3) élimination des particules dont la taille est inférieure à 20 µm, et
e4) l'élimination des oxydes d'azote,
dans lequel le sulfate de calcium purifié obtenu à l'étape b) contient au moins 50 % en poids d'anhydrite, sur la base du sulfate de calcium sec.

2. le procédé selon la revendication 1, **caractérisé par le fait qu'**il s'agit d'un procédé intégré.

3. Procédé selon la revendication 1 ou 2, **caractérisé par le fait que** la production d'acide phosphorique est effectuée par un procédé choisi parmi un procédé dihydrate (DH), un procédé hémihydrate (HH), un procédé dihydrate-hémihydrate (DHH), un procédé hémihydrate-dihydrate (HDH) et un procédé de filtration dihydrate-attaque-hémihydrate (DA-HF), de préférence parmi un procédé dihydrate (DH) et un procédé hémihydrate (HH).

4. Procédé selon l'une quelconque des revendications précédentes, **caractérisé par le fait que** le sulfate de calcium utilisé à l'étape a) est le sulfate de calcium obtenu à partir d'une unité de séparation dans la production d'acide phosphorique, de préférence en utilisant le solide de sulfate de calcium obtenu après la première séparation de l'acide phosphorique, de préférence le gâteau de filtration de sulfate de calcium, provenant de la production d'acide phosphorique, directement ou après un ou plusieurs lavages avec un liquide, de préférence de l'eau, et/ou Le sulfate de calcium stocké lors de la production d'acide phosphorique est utilisé.

5. Procédé selon l'une quelconque des revendications précédentes, **caractérisé par le fait que**
à l'étape a), l'acide est ajouté en quantité telle que le rapport pondéral entre les solides et le liquide (rapport S/L) dans la suspension est compris entre 1/10 et 1/1, de préférence entre 1/5 et 1/1, et/ou
l'acide résultant du traitement après l'étape a) est un acide de 1 à 12 molaires, de préférence de 3 à 10 molaires, plus préférentiellement de 5 à 8 molaires, et/ou
dans lequel l'acide est choisi parmi l'acide chlorhydrique, l'acide nitrique, l'acide sulfureux et/ou l'acide sulfurique, et/ou
dans lequel le traitement à l'étape a) est effectué à une température comprise entre 15 et 100°C, de préférence entre 30 et 80°C, plus préférentiellement entre 45 et 75°C, et/ou
la durée du traitement à l'étape a) est comprise entre 5 et 120 minutes, de préférence entre 15 et 90 minutes, plus préférentiellement entre 20 et 60 minutes.

6. Procédé selon l'une quelconque des revendications précédentes, **caractérisé par le fait que** le Dᵥ (50) de la distribution granulométrique du sulfate de calcium obtenu à l'étape b), en particulier du sulfate de calcium anhydrite, est compris entre 0,5 et 100 µm , de préférence entre 1 et 50 µm, en particulier entre 2 et 30 µm.

7. Procédé selon l'une quelconque des revendications précédentes, **caractérisé par le fait que** la phase liquide obtenue à l'étape b) est utilisée comme matière première dans la production d'acide phosphorique, en particulier comme partie de l'acide sulfurique nécessaire à la digestion du phosphate brut.

8. Procédé selon l'une quelconque des revendications précédentes, **caractérisé par le fait que** les adjuvants pour la production du mélange de farine brute à l'étape c) sont des matières premières ou des composés comprenant un ou plusieurs oxydes choisis parmi les oxydes de Si, Al, Fe et éventuellement Ca ou leurs précurseurs,
et/ou du carbone et/ou des hydrocarbures sont mélangés au sulfate de calcium en tant qu'agents réducteurs, et/ou
le clinker produit à l'étape d) est utilisé pour la production de ciment.

9. Procédé selon l'une quelconque des revendications précédentes, **caractérisé par le fait que** le dépôt à sec des particules de dioxyde de soufre aux étapes e1) et/ou e3) est effectué au moyen d'un cyclone, d'un séparateur à décantation, d'un séparateur à flux rotatif et/ou d'un électrofiltre.

10. Procédé selon la revendication 9, **caractérisé par le fait que** l'élimination des particules du dioxyde de soufre à l'étape e2) est effectuée au moyen d'un laveur Venturi, d'un laveur rotatif et/ou d'un laveur à jet, et que l'humidité résiduelle dans le dioxyde de soufre est de préférence éliminée par condensation et/ou par un électrofiltre humide.

11. Procédé selon l'une quelconque des revendications précédentes, **caractérisé par le fait que** les oxydes d'azote sont séparés du dioxyde de soufre à l'étape e4) par décomposition des oxydes d'azote en N₂ et H O.₂

12. Procédé selon l'une quelconque des revendications précédentes, **caractérisé par le fait que** le sulfate de calcium purifié obtenu à l'étape b), avant d'être envoyé à l'étape c), est soumis à une étape de purification supplémentaire pour l'élimination des terres rares, dans laquelle le sulfate de calcium purifié obtenu à l'étape b) est traité avec un liquide, de préférence avec de l'eau ou avec une solution aqueuse contenant un sel et/ou un ligand chélaté, et le sulfate de calcium purifié est séparé sous forme solide de la phase liquide dans la suspension ainsi obtenue, le sulfate de calcium purifié étant envoyé à l'étape c), et une ou plusieurs terres rares étant présentes dans la phase liquide.

13. Procédé selon l'une quelconque des revendications précédentes, **caractérisé en ce que** le degré de purification du sulfate de calcium à l'étape a) est établi en tenant compte des impuretés présentes dans les adjuvants utilisés pour le cru, et des valeurs indicatives de phosphore et de fluor à respecter pour le clinker de ciment, qui ne sont de préférence pas supérieures à 1.0% en poids, de préférence pas plus de 0,5% en poids, de préférence encore pas plus de 0,1% en poids, de P O₂₅ et/ou de préférence pas plus de 0,5% en poids, de préférence pas plus de 0,25% en poids, de préférence encore pas plus de 0,1% en poids, de F, et/ou
le bilan liquide, de préférence le bilan hydrique, de la production d'acide phosphorique n'est modifié que de manière insignifiante, voire pas du tout, par le procédé intégré, d'autant plus que l'apport de liquide, de préférence l'apport d'eau, pour la purification du sulfate de calcium dans le procédé intégré est couplé au bilan liquide, de préférence au bilan hydrique, de la production d'acide phosphorique.
